(19) **Europäisches Patentamt**
**European Patent Office**
**Office européen des brevets**

(11) **EP 2 415 832 B1**

(12) **EUROPEAN PATENT SPECIFICATION**

(45) Date of publication and mention
of the grant of the patent:
**15.02.2017 Bulletin 2017/07**

(51) Int Cl.:
**C08L 23/08** (2006.01)    **C08L 23/14** (2006.01)
**C08L 23/16** (2006.01)    **C08L 53/02** (2006.01)

(21) Application number: **10761549.4**

(22) Date of filing: **11.03.2010**

(86) International application number:
**PCT/JP2010/054145**

(87) International publication number:
**WO 2010/116848 (14.10.2010 Gazette 2010/41)**

(54) **THERMOPLASTIC RESIN COMPOSITION**

THERMOPLASTISCHE HARZZUSAMMENSETZUNG

COMPOSITION DE RÉSINE THERMOPLASTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009082698**

(43) Date of publication of application:
**08.02.2012 Bulletin 2012/06**

(73) Proprietor: **Mitsui Chemicals, Inc.**
**Tokyo 105-7117 (JP)**

(72) Inventors:
• **HOYA, Hiroshi**
**099254 Singapore (SG)**
• **HAYAKAWA, Yoji**
**Ichihara-shi**
**Chiba 299-0108 (JP)**
• **MATSUNAGA, Koji**
**Ichihara-shi**
**Chiba 299-0108 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 226 357**       **WO-A1-2006/057361**
**WO-A1-2008/059746**     **JP-A- 11 349 748**
**JP-A- 58 215 446**       **JP-A- 2008 169 257**

EP 2 415 832 B1

**Description**

TECHNICAL FIELD

The present invention relates to thermoplastic resin compositions having excellent flexibility and heat resistance. In more detail, the invention relates to thermoplastic resin compositions containing a propylene copolymer and a styrene block copolymer.

BACKGROUND ART

Thermoplastic elastomers (TPE) have melt processability that is comparable to that of plastics such as polyolefins (PE and PP) and show flexibility and rubber elasticity similar to those of crosslinked rubbers. They are used in wide applications including automobiles, home electrical appliances, food industry, medical products and daily goods. TPE have various variations such as olefin elastomers, styrene elastomers, polyester elastomers, polyurethane elastomers, polyamide elastomers and polyvinyl chloride (PVC) elastomers. In particular, the styrene elastomers are one of the most frequently used TPE.

The styrene thermoplastic elastomers, generally otherwise referred to as SBC (styrene block copolymers), are the general term for block copolymers in which the hard segment as the constrained phase is composed of polystyrene. The soft segment is a conjugated diene polymer such as butadiene, or a hydrogenated product (hydrogen addition product) thereof. The soft segments and the hard segments form a microphase-separated structure at normal temperature, with the hard segments serving as physical crosslinking points. As a result, the copolymers exhibit elastomeric performances (flexibility and rubber elasticity) without chemical crosslinking. Hydrogenated SBC (HSBC) have no double bonds in the molecule and show superior heat resistance and weather resistance to unhydrogenated SBC. HSBC are widely used as compound materials. The compound materials involving HSBC are generally referred to as TPS.

In order to compensate for the performances which are insufficient with HSBC alone, TPS contains various materials (thereby forming a polymer alloy). For example, crystalline polyolefins (usually PP having a high melting point) or softeners such as paraffin oils are added to improve the heat resistance. In particular, the softener is important because it is responsible for controlling the flexibility of TPS. Thus, the softener is usually an essential component in designing TPS with a low hardness. However, the elution (the bleeding) of an amorphous and low-molecular weight softener can cause problems in some applications, for example in the fields of food, medical care and childcare. Further, the bleeding of a softener from electronic parts risks contaminating the devices. The need of flexibility or rubber elasticity is frequent in applications related to these fields. Thus, there has been a need for a technique which designs flexible TPS that is free from the risk of the softener elution (bleeding) (for example, Patent Literature 1).

The key in addressing this problem is the flexibilization of a crystalline polyolefin (usually PP) that is added to TPS. Several techniques related thereto have been proposed, with examples including a technique using a low-crystalline PP (for example, Patent Literature 2), a technique which uses a high rubber content PP referred to as R-TPO (for example, Patent Literature 3), and a technique using an amorphous poly-alpha-olefin (APAO) (for example, Patent Literature 4). However, these techniques cannot achieve sufficient heat resistance (in particular creep resistance to withstand stress at a high temperature).

Meanwhile, propylene-based elastomers are known as polyolefin soft materials having excellent flexibility, heat resistance and transparency as well as environmental suitability and sanitation properties (for example, Patent Literature 5). In detail, Patent Literature 5 discloses a composition containing an isotactic polypropylene and an ethylene/propylene/$\alpha$-olefin copolymer.

Further, Patent Literature 6 describes a composition containing an isotactic polypropylene, an ethylene/propylene/$\alpha$-olefin copolymer and a styrene elastomer.

Citation List

Patent Literatures

Patent Literature 1: JP-A-2002-348432
Patent Literature 2: JP-A-2002-187998
Patent Literature 3: Japanese Patent No. 3700515
Patent Literature 4: Japanese Patent No. 3757162
Patent Literature 5: WO 2004/106430
Patent Literature 6: WO 2006/057361

JP 58 215446 A relates to resin composition comprising 60-98wt% of a block copolymer and 40-2wt% isotactic polypropylene or copolymer mainly composed of the same, wherein both terminal blocks of the block copolymer are composed of an aromatic vinyl compound polymer having a number-average MW of 5,000-125,000 and the intermediate block is composed of a conjugated diene polymer.

EP 2 226 357 A1 relates to a propylene-based polymer composition which comprises (A) a propylene-based polymer (PP) satisfying the following requirements (1) and (2), in an amount of 1 to 99 parts by weight, and (B) a propylene/ethylene/$\alpha$-olefin copolymer satisfying the following requirements (I) to (III), in an amount of 99 to 1 part by weight, with the proviso that the total amount of the component (A) and the component (B) is 100 parts by weight; (1) the polymer (A) has a melting point ($T_m$), as measured by a differential scanning calorimeter (DSC), of not lower than 110 °C but not higher than 170 °C, (2) the polymer (A) has an isotactic pentad fraction (mmmm fraction) of not less than 90%, (I) the copolymer (B) contains constitutional units derived from propylene in amounts of 73.1 to 87.0% by mol, constitutional units derived from ethylene in amounts of 10.0 to 16.9% by mol and constitutional units derived from an $\alpha$-olefin of 4 to 20 carbon atoms in amounts of 3.0 to 10.0% by mol, (II) the copolymer (B) has an isotactic triad fraction (mm), as calculated by $^{13}$C-NMR, of not less than 85%, and (III) the copolymer (B) has a molecular weight distribution (Mw/Mn, Mw: weight-average molecular weight, Mn:; number-average molecular weight, both being in terms of polystyrene), as measured by gel permeation chromatography (GPC), of not more than 3.5.

SUMMARY OF INVENTION

Technical Problem

The elastomers according to the above techniques show higher heat resistance (creep resistance) than do TPS containing HSBC. However, increasing the flexibility results in a high tackiness (stickiness) of the material. Further, the tackiness (stickiness) is increased when the material is subjected to a prolonged heat treatment at a high temperature. In other words, the compositions disclosed in Patent Literatures 5 and 6 achieve some improvements in heat resistance but have a tackiness problem.

The present invention then aims at solving the problems in the art described above. It is therefore an object of the invention to provide a thermoplastic elastomer composition that has an excellent balance between flexibility and heat resistance (creep resistance), shows little tackiness (stickiness) and is not deteriorated in design properties even when exposed to a high temperature.

Solution to Problem

The present invention is concerned with the following (1) to (6).

(1) A thermoplastic elastomer composition (X) which comprises 95 to 5 wt% of a propylene copolymer (A) satisfying all the requirements (A1) to (A3) described below, 0 to 70 wt% of a crystalline polyolefin polymer (B) and 5 to 95 wt% of a styrene block copolymer (C) (wherein the total of the propylene copolymer (A), the crystalline polyolefin polymer (B) and the styrene block copolymer (C) is 100 wt%);

(A1) the Shore A hardness (room temperature, ASTM D 2240) is in the range of 55 to 85;
(A2) the copolymer gives a melting peak Tm in the range of 30 to 95°C according to differential scanning calorimetry (DSC), and the endothermic enthalpy $\Delta$H corresponding to the melting peak is in the range of 1.0 to 20 J/g;
(A3) the molecular weight distribution Mw/Mn according to gel permeation chromatography (GPC) is in the range of 1.2 to 3.0 (wherein Mw and Mn are the weight average molecular weight and the number average molecular weight, respectively, and are values calibrated to polystyrenes).

(2) The thermoplastic elastomer composition (X) described in (1), wherein the propylene copolymer (A) further satisfies all the requirements (A4) to (A6) below:

(A4) the copolymer is a propylene/ethylene/$C_{4-20}$ $\alpha$-olevin copolymer comprising 51 to 90 mol% of structural units derived from propylene, 7 to 24 mol% of structural units derived from ethylene and 3 to 25 mol% of structural units derived from a $C_{4-20}$ $\alpha$-olefin (wherein the total of the structural units from propylene, the structural units from ethylene and the structural units from a $C_{4-20}$ $\alpha$-olefin is 100 mol%);
(A5) the isotactic triad fraction (mm) calculated by $^{13}$C-NMR is 85 to 99.9%;
(A6) the value B defined by Equation (1) below is 0.8 to 1.3:

[Math. 1]

$$B = \frac{M_{0E}}{2\,M_0 \cdot M_E} \quad \cdots (1)$$

wherein $M_{OE}$ is the molar fraction of the total of propylene-ethylene sequences and $C_{4-20}$ $\alpha$-olefin-ethylene sequences to all the dyad sequences, $M_O$ is the total of the molar fractions of propylene and the $C_{4-20}$ $\alpha$-olefin, and $M_E$ is the molar fraction of ethylene.

(3) The thermoplastic elastomer composition (X) described in (1) or (2), wherein the crystalline polyolefin polymer (B) is a crystalline propylene polymer which satisfies all the requirements (B1) and (B2) below:

(B1) the melting point Tm (B) according to differential scanning calorimetry (DSC) is in the range of 100 to 175°C;
(B2) the isotactic pentad fraction (mmmm) is 80 to 99.8%.

(4) The thermoplastic elastomer composition (X) described in any one of (1) to (3), wherein the Shore A hardness (room temperature, ASTM D 2240) is in the range of 40 to 85.
(5) The thermoplastic elastomer composition (X) described in any one of (1) to (4), wherein the total content of the propylene copolymer (A) and the crystalline polyolefin polymer (B) is not less than 50 wt%.
(6) The thermoplastic elastomer composition (X) described in any one of (1) to (5), further comprising a softener (D).

Advantageous Effects of Invention

The thermoplastic elastomer compositions according to the invention have good flexibility, rubber elasticity and heat resistance, show little tackiness (stickiness) at room temperature, and do not lower the glaze (gloss) even after heat treated at a high temperature, namely the compositions have excellent design properties.
It has been further found that the selection of a specific styrene block copolymer allows for the thermoplastic elastomer composition to achieve improved flexibility as well as little tackiness (stickiness) at room temperature and show excellent shaping processability.
The thermoplastic elastomer compositions of the invention are useful as compound materials. For example, the use of the thermoplastic elastomer composition results in an elastomer product which shows excellent flexibility and heat resistance even with a reduced amount of an added softener such as oil.
Such elastomer products have wide applications including food container materials, medical materials, infant and child care items, sealing materials, electric and electronic parts, adhesives and pressure-sensitive adhesives, daily goods, skin materials and automobile interior materials.

DESCRIPTION OF EMBODIMENTS

The present invention will be described in detail below.
A thermoplastic elastomer composition (X) according to the invention includes a propylene copolymer (A), a crystalline polyolefin polymer (B) which is optional, and a styrene block copolymer (C). The propylene copolymers (A) have a Shore A hardness (A1) (room temperature, ASTM D 2240) in the range of 55 to 85, and such copolymers are also referred to as soft propylene copolymers. The compositions containing the soft propylene copolymer, a crystalline polyolefin polymer (B) which is optional, and a styrene block copolymer (C) are otherwise referred to as soft thermoplastic elastomer compositions.

⟨Propylene copolymers (A)⟩

The propylene copolymers (A) used in the invention satisfy all the requirements (A1) to (A3) described below. The propylene copolymers (A) may be used singly, or two or more kinds may be used in combination.
(A1) The Shore A hardness (room temperature, ASTM D 2240) is in the range of 55 to 85, preferably 60 to 80.
(A2) The copolymer gives a melting peak Tm in the range of 30 to 95°C, preferably 35 to 80°C, and more preferably 40 to 70°C according to DSC, and the endothermic enthalpy ΔH corresponding to the melting peak is in the range of 1.0 to 20 J/g, preferably 1.5 to 15 J/g, and more preferably 3 to 15 J/g.
(A3) The molecular weight distribution Mw/Mn according to gel permeation chromatography (GPC) is in the range of 1.2 to 3.0, preferably 1.2 to 3.5, and more preferably 1.6 to 2.6 (wherein Mw and Mn are the weight average molecular weight and the number average molecular weight, respectively, and are values calibrated to polystyrenes). By using the propylene copolymer (A) which satisfies all the requirements (A1) to (A3), the obtainable thermoplastic elastomer composition (X) has an excellent balance between flexibility and heat resistance (creep resistance), shows little tackiness (stickiness) and is not deteriorated in design properties even when exposed to a high temperature. Preferably, the propylene copolymer (A) further satisfies any of the requirements (A4) to (A6) described below, or satisfies all the requirements (A4) to (A6).

(A4) The copolymer is a propylene/ethylene/$C_{4-20}$ $\alpha$-olefin copolymer including 51 to 90 mol% of structural units derived from propylene, 7 to 24 mol% of structural units derived from ethylene and 3 to 25 mol% of structural units derived from a $C_{4-20}$ $\alpha$-olefin (wherein the total of the structural units from propylene, the structural units from ethylene and the structural units from a $C_{4-20}$ $\alpha$-olefin is 100 mol%).

In an embodiment, the propylene copolymer (A) preferably includes the propylene-derived structural units at 60 to 89 mol%, more preferably 62 to 88 mol%, the ethylene-derived structural units at 8 to 20 mol%, more preferably 8 to 18 mol%, and the $C_{4-20}$ $\alpha$-olefin-derived structural units at 3 to 20 mol%, more preferably 4 to 20 mol% (wherein the total of the propylene-derived structural units, the ethylene-derived structural units and the $C_{4-20}$ $\alpha$-olefin-derived structural units is 100 mol%). When the propylene copolymer (A) satisfies the requirement (A4), the propylene copolymer (A) and the crystalline polyolefin polymer (B) described later may be compatibilized on the molecular level, and the resultant propylene composition formed from the propylene copolymer (A) and the crystalline polyolefin polymer (B) achieves excellent heat resistance and mechanical strength.

Examples of the $C_{4-20}$ $\alpha$-olefins include 1-butene, 1-pentene, 1-hexene, 4-methyl-1-pentene, 1-octene, 1-decene, 1-dodecene, 1-tetradecene, 1-hexadecene, 1-octadecene and 1-eicosene. The $C_{4-20}$ $\alpha$-olefins may be used singly, or two or more kinds may be used in combination. Of these, 1-butene is preferably used because such a propylene copolymer (A) shows drastically improved compatibility with the crystalline polyolefin polymer (B) and further because the properties of the obtainable thermoplastic elastomer composition (X) are drastically improved.

(A5) The isotactic triad fraction (mm) calculated by $^{13}$C-NMR is 85 to 99.9%, preferably 85 to 99.8%, and more preferably 87 to 99.8%.

The propylene copolymer (A) having this isotactic triad fraction (mm) does not completely lose crystallinity even when comonomers such as ethylene and 1-butene are copolymerized in a large amount. As a result, excellent mechanical strength, high break elongation and good rubber elasticity are obtained. Further, such a propylene copolymer (A) is partially incorporated in the crystal of the crystalline polyolefin polymer (B), with the result that the obtainable thermoplastic elastomer composition (X) achieves drastically improved properties, in particular heat resistance.

(A6) The value B defined by Equation (1) below is 0.8 to 1.3, preferably 0.9 to 1.2, and more preferably 0.9 to 1.1.
[Math. 2]

$$B = \frac{M_{OE}}{2\,M_O \cdot M_E} \quad \cdots (1)$$

wherein $M_{OE}$ is the molar fraction of the total of propylene-ethylene sequences and $C_{4-20}$ $\alpha$-olefin-ethylene sequences to all the dyad sequences, $M_O$ is the total of the molar fractions of propylene and the $C_{4-20}$ $\alpha$-olefin, and $M_E$ is the molar fraction of ethylene.

The propylene copolymer (A) having this value B shows excellent compatibility with the crystalline polyolefin polymer (B). If the value B is in excess of the above range, the copolymer has a primary molecular structure similar to an alternating copolymer in which the monomers (propylene, ethylene and the $C_{4-20}$ $\alpha$-olefin) are bonded alternately. Such a copolymer may have poor compatibility with the crystalline polyolefin polymer (B). If the value B is below the aforementioned range, the copolymer has a primary molecular structure similar to a block copolymer in which the monomers form the respective blocks. Such a copolymer may have poor compatibility with the crystalline polyolefin polymer (B).

Preferably, the propylene copolymer (A) further satisfies any of the following requirements (A7) to (A9).

(A7) The ratio of 2,1-insertions of propylene monomers in all the propylene insertions is less than 1%, preferably 0 to 0.5%, and more preferably 0 to 0.1%. Here, the 2,1-insertions are analyzed by $^{13}$C-NMR.

The 2,1-insertion (inversion) ratio in this range means that the propylene copolymer (A) has excellent regioregularity. The 2,1-insertions reduce the crystallinity. The propylene copolymer (A) having few such insertions is suitable in the invention. The ratio of 2,1-insertions of propylene monomers in all the propylene insertions may be calculated by the method described in JP-A-H07-145212. In a particularly preferred embodiment, no peaks are observed in the range of 15.0 to 17.5 ppm.

(A8) The glass transition temperature (Tg) that is observed as a transition point in a DSC curve is in the range of -10°C to -50°C, and preferably -15°C to -40°C. When the propylene copolymer (A) satisfies the requirement (A8), the obtainable thermoplastic elastomer composition (X) achieves low-temperature properties that are sufficient for practical use.

(A9) The melt flow rate (MFR) (ASTM D 1238, 230°C, 2.16 kg load), although not particularly limited, is desirably 0.1 to 500 g/10 min, preferably 0.5 to 50 g/10 min, and more preferably 1 to 40 g/10 min. When the propylene copolymer (A) satisfies the requirement (A8), the obtainable thermoplastic elastomer composition (X) achieves fluidity (injection molding properties) and mechanical strength with a good balance.

In more detail, propylene/ethylene/1-butene copolymers as those used in Examples later are suitable as the propylene copolymers (A) satisfying all the requirements (A1) to (A3). In an embodiment, however, atactic homopolypropylenes (or atactic propylene/$\alpha$-olefin copolymers) in which propylene monomers have a lowered stereoregularity, block propylene/$\alpha$-olefin copolymers and syndiotactic propylene/$\alpha$-olefin copolymers may be used.

The propylene copolymer (A) of the invention may be generally obtained by copolymerizing propylene, ethylene and the $C_{4-20}$ $\alpha$-olefin in the presence of a metallocene catalyst. For example, catalysts described in WO 2004/087775, particularly in Examples e1 to e5, maybe used as the metallocene catalysts without limitations.

The requirements (A1) and (A2) of the propylene copolymer (A) may be controlled by, for example, selecting the kind of the metallocene catalyst used in the polymerization or manipulating the feed ratio of the monomers (C3, C2 and C4). The requirements (A3) and (A5) to (A7) may be controlled by, for example, selecting the kind of the metallocene catalyst used in the polymerization. The requirement (A4) may be controlled by, for example, manipulating the feed ratio of the monomers (C3, C2 and C4) in the polymerization. The requirement (A8) may be controlled by, for example, manipulating the feed ratio of the monomers (C3, C2 and C4) in the polymerization or changing the parameters described in the requirements (A5) to (A7).

⟨Crystalline polyolefin polymers (B)⟩

The crystalline polyolefin polymers (B) include crystalline isotactic polypropylenes (b) such as homopolypropylenes, propylene/$C_{2-20}$ $\alpha$-olefin (except propylene) random copolymers and propylene block copolymers. The crystalline polyolefin polymers (B) may be used singly, or two or more kinds may be used in combination.

The crystalline polyolefin polymers (B) preferably satisfy all the following requirements (B1) and (B2).

(B1) The melting point Tm (B) according to differential scanning calorimetry (DSC) is 100 to 175°C, preferably 110 to 170°C, and more preferably 125 to 1.70°C.

(B2) The isotactic pentad fraction (mmmm) is 80% to 99.8%, preferably 93% to 99.7%, and more preferably 95% to 99.6%.

The isotactic pentad fraction (mmmm) is measured by $^{13}$C-NMR. The isotactic pentad fraction (mmmm) indicates the ratio of isotactic pentad sequences in the molecular chain. It refers to the fraction of propylene monomer units found in the center of sequences in which five propylene monomer units are continuously meso-linked. In detail, the isotactic pentad fraction is calculated as a fraction of the mmmm peak relative to all the absorption peaks observed in the methyl carbon region of a $^{13}$C-NMR spectrum. The isotactic pentad fraction (mmmm fraction) may be determined by, for example, the method described in JP-A-2007-186664.

When the crystalline polyolefin polymer (B) satisfies all the requirements (B1) and (B2), it shows good compatibility with the propylene copolymer (A) and contributes to the improvements in mechanical properties and heat resistance of the thermoplastic elastomer composition (X).

A suitable crystalline polyolefin polymer (B) satisfying the requirements (B1) and (B2) is a crystalline isotactic polypropylene (b) which satisfies the requirements (B1) and (B2). In more detail, the crystalline isotactic polypropylenes (b) include homopolypropylenes, propylene/$C_{2-20}$ $\alpha$-olefin (except propylene) random copolymers and propylene block copolymers which all satisfy the requirements (B1) and (B2). Such homopolypropylenes and propylene/$C_{2-20}$ $\alpha$-olefin random copolymers are more preferable. From the viewpoints of the heat resistance and the rigidity of the obtainable compositions, the homopolypropylenes are particularly preferable. From the viewpoints of the flexibility and the transparency of the obtainable compositions, the propylene/$C_{2-20}$ $\alpha$-olefin random copolymers are particularly preferable. Examples of the $C_{2-20}$ $\alpha$-olefins except propylene include ethylene, 1-butene, 1-pentene, 3-methyl-1-butene, 1-hexene, 4-methyl-1-pentene, 1-octene, 1-decene, 1-dodecene, 1-tetradecene, 1-hexadecene, 1-octadecene and 1-eicosene. The $C_{2-20}$ $\alpha$-olefins may be used singly, or two or more kinds may be used in combination.

More preferred propylene/$C_{2-20}$ $\alpha$-olefin random copolymers are propylene/ethylene copolymers, propylene/$C_{4-10}$ $\alpha$-olefin copolymers and propylene/ethylene/$C_{4-10}$ $\alpha$-olefin copolymers.

The structural units from propylene usually constitute not less than 90 mol% relative to 100 mol% of the total of the structural units from propylene and the structural units from the $C_{2-20}$ $\alpha$-olefin(s) except propylene.

Preferably, the crystalline polyolefin polymer (B) further satisfies any of the requirements (B3) to (B5) described below, or satisfies all the requirements (B3) to (B5).

(B3) The melt flow rate (MFR) (ASTM D 1238, 230°C, 2.16 kg load), although not particularly limited, is desirably 0.1 to 500 g/10 min, preferably 0.5 to 100 g/10 min, and more preferably 1 to 70 g/10 min. When the crystalline polyolefin polymer (B) satisfies the requirement (B3), it shows good compatibility with the propylene copolymer (A) and the obtainable thermoplastic elastomer composition (X) achieves excellent heat resistance and mechanical strength.

(B4) The melting enthalpy $\Delta H$ (B) which corresponds to the melting point Tm (B) in the requirement (B1) is 50 to 130 J/g, and preferably 55 to 120 J/g. When the crystalline polyolefin polymer (B) has a melting enthalpy $\Delta H$ (B) in this range, the obtainable thermoplastic elastomer composition (X) shows excellent shaping properties, heat resistance and transparency as well as little stickiness.

(B5) The tensile elastic modulus is 500 to 3000 MPa, preferably 600 to 2500 MPa, and more preferably 650 to 2200 MPa. The tensile elastic modulus is obtained by testing a 2 mm thick pressed sheet at 23°C in accordance with JIS K7113-2.

The crystalline polyolefin polymers (B) for use in the invention may be produced by various methods, for example by using a stereoregular catalyst.

In detail, the crystalline polyolefin polymer may be produced using a catalyst formed of a solid titanium catalyst component, an organometallic compound catalyst component and optionally an electron donor.

Specific examples of the solid titanium catalyst components include solid titanium catalyst components in which titanium trichloride or a titanium trichloride composition is supported on a carrier having a specific surface area of not less than 100 $m^2$/g, and solid titanium catalyst components in which magnesium, a halogen, an electron donor (preferably an aromatic carboxylate or an alkyl group-containing ether) and titanium as essential components are supported on a carrier having a specific surface area of not less than 100 $m^2$/g.

Preferred organometallic compound catalyst components are organoaluminum compounds. Examples of the organoaluminum compounds include trialkylaluminums, dialkylaluminum halides, alkylaluminum sesquihalides and alkylaluminum dihalides. The organoaluminum compound may be selected appropriately depending on the kind of the titanium catalyst component.

Examples of the electron donors include organic compounds containing a nitrogen atom, a phosphorus atom, a sulfur atom, a silicon atom, a boron atom or the like. Preferred examples are ester compounds and ether compounds containing these atoms.

The catalysts may be activated by methods such as co-pulverization, or may be prepolymerized with the olefins.

The crystalline polyolefin polymer (B) may also be produced using a known metallocene catalyst.

⟨Styrene block copolymers (C)⟩

The styrene block copolymers (C) in the invention are not particularly limited. Styrene/diene thermoplastic elastomers are suitable, and block copolymer elastomers and random copolymer elastomers are preferable. Herein, the styrene components include styrene, $\alpha$-methylstyrene, p-methylstyrene, vinylxylene, vinylnaphthalene and mixtures thereof, and the diene components include butadiene, isoprene, pentadiene and mixtures thereof. The styrene block copolymers (C) may be used singly, or two or more kinds may be used in combination.

Examples of the styrene block copolymers (C) include hydrogenated diene polymers containing polybutadiene block segments and styrene compound (including styrene, the same applies hereinafter)/butadiene copolymer block segments; hydrogenated diene polymers containing polyisoprene block segments and styrene compound/isoprene copolymer block segments; block copolymers containing styrene compound-based polymer blocks and conjugated diene compound-based polymer blocks; hydrogenated products of styrene compound/conjugated diene compound random copolymers; and hydrogenated products of block copolymers containing styrene compound-based polymer blocks and conjugated diene compound-based polymer blocks.

Of these, polystyrene/polybutadiene block copolymers, polystyrene/polyisoprene block copolymers and hydrogenated products of these polymers are more preferable. In detail, commercial hydrogenated SEBS or SEPS products are suitably used. In the case where a softener (D) described later is used, high-molecular SEBS may be suitably used since it has excellent affinity for the softener (D).

The content of the styrene component in the styrene block copolymer (C), although not particularly limited, is preferably in the range of 5 to 40 wt% from the viewpoints of flexibility and rubber elasticity.

(Other components)

The thermoplastic elastomer composition (X) may contain other components as required in addition to the propylene copolymer (A), the crystalline polyolefin polymer (B) and the styrene block copolymer (C).

A softener (D) is suitably used as such an additional component. The softener (D) is useful for fine-adjusting the hardness or the fluidity of the thermoplastic elastomer composition (X).

Examples of the softeners (D) include oils such as paraffin process oils and silicone oils, with paraffin process oils being preferable. The softeners (D) may be used singly, or two or more kinds may be used in combination.

Desirably, the oils have a dynamic viscosity at 40°C of 20 to 800 cst (centistokes), preferably 40 to 600 cst, a pour point of 0 to -40°C, preferably 0 to -30°C, and a flash point (COC method) of 200 to 400°C, preferably 250 to 350°C.

The thermoplastic elastomer compositions (X) may contain additives while still achieving the objects of the invention. Such additives include weathering stabilizers, heat stabilizers, antistatic agents, anti-slip agents, antiblocking agents, antifogging agents, nucleating agents, lubricants, pigments, dyes, plasticizers, anti-aging agents, hydrochloric acid absorbers, antioxidants and copper inhibitors.

⟨Thermoplastic elastomer compositions (X)⟩

The thermoplastic elastomer composition (X) of the invention contains 95 to 5 wt% of the propylene copolymer (A), 0 to 70 wt% of the crystalline polyolefin polymer (B) and 5 to 95 wt% of the styrene block copolymer (C) (wherein the total of the propylene copolymer (A), the crystalline polyolefin polymer (B) and the styrene block copolymer (C) is 100 wt%). In other words, the thermoplastic elastomer composition (X) may be a composition (x1) which contains 95 to 5 wt% of the propylene copolymer (A) and 5 to 95 wt% of the styrene block copolymer (C) (wherein the total of the propylene copolymer (A) and the styrene block copolymer (C) is 100 wt%), or may be a composition (x2) which contains the propylene copolymer (A) at less than 95 wt% to not less than 5 wt%, the crystalline polyolefin polymer (B) at more than 0 wt% to not more than 70 wt% and the styrene block copolymer (C) at 5 wt% to less than 95 wt%. These contents of the components ensure that the balance of flexibility and heat resistance (creep resistance) is improved, the tackiness (stickiness) is small, and the design properties will not be deteriorated even when the composition is used at a high temperature.

In a preferred embodiment, the thermoplastic elastomer composition (x2) contains the propylene copolymer (A) at 4 to 94 wt%, the crystalline polyolefin polymer (B) at 1 to 50 wt% and the styrene block copolymer (C) at 5 to 95 wt%. In a more preferred embodiment, the composition contains the propylene copolymer (A) at 4 to 90 wt%, the crystalline polyolefin polymer (B) at 5 to 50 wt% and the styrene block copolymer (C) at 5 to 91 wt%. When the contents of the components are in this range, the crystalline polyolefin polymer (B) provides heat resistance and the propylene copolymer (A) delivers flexibility, with the result that the thermoplastic elastomer composition (x2) achieves a good balance between flexibility and heat resistance.

The properties of the thermoplastic elastomer composition (x2) may be enhanced by selecting the styrene block copolymer (C) in consideration of the compatibility with the propylene copolymer (A). In detail, the use of a hydrogenated product of a polystyrene/polyisoprene block copolymer as the styrene block copolymer (C) results in an improved balance between flexibility and heat resistance (creep resistance), reduced tackiness (stickiness), and more rigid design properties at high temperatures.

In the thermoplastic elastomer composition (x2), the total content of the propylene copolymer (A) and the crystalline polyolefin polymer (B) is desirably not less than 50 wt%, and preferably 50 to 85 wt% relative to 100 wt% of the total content of the propylene copolymer (A), the crystalline polyolefin polymer (B) and the styrene block copolymer (C). This total content of the propylene copolymer (A) and the crystalline polyolefin polymer (B) results in an improved balance between flexibility and heat resistance (creep resistance), reduced tackiness (stickiness), and more rigid design properties at high temperatures. In this case, the above advantageous effects are more significant when the styrene block copolymer (C) is a hydrogenated product of a polystyrene/polyisoprene block copolymer or a hydrogenated product of a polystyrene/polybutadiene block copolymer (particularly preferably such a hydrogenated copolymer having a vinyl bond (1,2-bond) content of 10 to 60%). This vinyl bond (1,2-bond) content leads to an optimum compatibility of the propylene copolymer (A), the crystalline polyolefin polymer (B) and the styrene block copolymer (C), and the obtainable thermoplastic elastomer composition (X) achieves flexibility and heat resistance that are balanced at a high level.

When the thermoplastic elastomer composition (X) contains the softener (D), the content of the softener (D) is desirably 1 to 100 parts by weight, and preferably 1 to 50 parts by weight based on 100 parts by weight of the total of the propylene copolymer (A), the crystalline polyolefin polymer (B) and the styrene block copolymer (C). This content of the softener (D) results in difficult bleed out (elution) of the softener (D). In this case, the use of a hydrogenated product of a high-molecular weight polystyrene/polybutadiene block copolymer as the styrene block copolymer (C) enables a higher suppression of the bleed out (elution) of the softener (D).

When the thermoplastic elastomer composition (X) contains the aforementioned additives (such as weather stabilizers), the total content of such additives is preferably 0.01 to 20 parts by weight based on 100 parts by weight of the total of the propylene copolymer (A), the crystalline polyolefin polymer (B) and the styrene block copolymer (C).

The thermoplastic elastomer composition (X) preferably has a Shore A hardness (room temperature, ASTM D 2240) in the range of 40 to 85, more preferably 40 to 80, and still more preferably 40 to 70. The Shore A hardness in this range allows the thermoplastic elastomer composition (X) to be used in various applications requiring flexibility.

Here, the Shore A hardness of the thermoplastic elastomer composition (X) is measured by the Shore A hardness measurement method described in (1-1) Evaluation of basic properties of thermoplastic elastomer compositions (X) in Examples later. As described in (1-2) Thermal stability of thermoplastic elastomer compositions (X), the Shore A hardness value of an injection molded article is substantially the same as that measured by the Shore A hardness measurement method described in (1-1) Evaluation of basic properties of thermoplastic elastomer compositions (X).

The thermoplastic elastomer composition (X) may be obtained by any methods without limitation. For example, the aforementioned components may be added in any order and mixed together using a known kneader (for example, a single-screw or twin-screw extruder, a Banbury mixer, a roll mill or a calender). In the case where the crystalline polyolefin polymer (B) is used, the propylene copolymer (A) and the crystalline polyolefin polymer (B) may be formed simultaneously or successively to give a composition, and the composition may be mixed with the styrene block copolymer (C) and other components. Alternatively, the propylene copolymer (A) and the crystalline polyolefin polymer (B) may be produced separately and mixed with the styrene block copolymer (C) and other components. Still alternatively, either of the propylene copolymer (A) and the crystalline polyolefin polymer (B) may be produced first and may be added during the production of the other component to give a composition, and the composition may be mixed with the styrene block copolymer (C) and other components.

The thermoplastic elastomer composition (X) of the invention may be shaped by known methods into various elastomer products (shaped articles). The elastomer products have wide applications including food container materials, medical materials, infant and child care items, sealing materials, electric and electronic parts, adhesives and pressure-sensitive adhesives, daily goods, skin materials and automobile interior materials.

EXAMPLES

The present invention will be described in detail based on examples hereinbelow without limiting the scope of the invention.

⟨Materials for thermoplastic elastomer compositions (X)⟩

[Propylene copolymers (A)]

Described below is an example of the production of the two kinds of propylene copolymers (A) (PEBR-1 and PEBR-2) used in Examples. The propylene copolymers (A) (PEBR-1 and PEBR-2) used in the invention were produced in accordance with the production example.

Diphenylmethylene(3-tert-butyl-5-ethylcyclopentadienyl)(2,7-di-tert-butylfluorenyl) zirconium dichloride which had been prepared by the method described in JP-A-2007-186664 was used as a polymerization catalyst, and methylaluminoxane (manufactured by Toso Finechem Corporation, 0.3 mmol in terms of aluminum) was used as a cocatalyst. Ethylene, propylene and 1-butene as raw materials were polymerized in a hexane solution in the presence of the polymerization catalyst and the cocatalyst using a continuous polymerization apparatus to give a propylene/ethylene/1-butene copolymer (PEBR-1 or PEBR-2).

Properties of PEBR-1 and PEBR-2 are shown in Table 1.

[Table 1]

Table 1

|  |  | PEBR-1 | PEBR-2 |
|---|---|---|---|
| Shore A |  | 74 | 44 |
| Ethylene content | mol% | 16.5 | 13.5 |
| Propylene content | mol% | 77.7 | 67.5 |
| 1-Butene content | mol% | 6.2 | 19.1 |
| Mw/Mn |  | 2.1 | 2.1 |
| mm | % | 92.1 | 91.4 |
| Value B |  | 1.0 | 1.0 |
| Tm (1) | °C | 55.4 | none |
| ΔH (1) | J/g | 8.5 | none |
| MFR | g/10 min | 7.0 | 7.2 |

The properties described in Table 1 were measured by the following methods.

[Shore A hardness]

The polymer was preheated for 5 minutes with a hydraulic hot press machine set at 190°C and was then pressed for 2 minutes. Immediately thereafter, the polymer was cooled in a cooling tank set at 20°C for 4 minutes to give a 3 mm thick pressed sheet. The sheet was stored under an environment at 23°C±2°C for 72 hours and was tested using an A-type measuring device. The hardness was determined by reading the scale immediately after the indenter touched the sheet (in accordance with ASTM D-2240).

In the production of the pressed sheet, a 100 $\mu$m PET film (LUMIRROR manufactured by TORAY INDUSTRIES INC.) was used as a release film.

[Comonomer contents]

The comonomer contents were determined by analyzing a $^{13}$C-NMR spectrum.

[Molecular weight distribution (Mw/Mn)]

The molecular weights were measured by GPC (gel permeation chromatography) using orthodichlorobenzene solvent (mobile phase) at a column temperature of 140°C (calibrated to polystyrenes, Mw: weight average molecular weight, Mn: number average molecular weight). In detail, the molecular weight distribution (Mw/Mn) was determined as follows using gel permeation chromatograph Alliance GPC-2000 manufactured by Waters Corporation. Two TSK gel GNH6-HT columns and two TSK gel GNH6-HTL columns, each having a diameter of 7.5 mm and a length of 300 mm, were used as the separation columns. The column temperature was set at 140°C. The mobile phase was o-dichlorobenzene (Wako Pure Chemical Industries, Ltd.) containing 0.025 wt% of BHT (Takeda Pharmaceutical Company Limited) as an antioxidant, and was flowed at 1.0 ml/min. The sample concentration was 15 mg/10 ml, and the sample injection volume was 500 $\mu$l. A differential refractometer was used as a detector. Standard polystyrenes manufactured by Toso Corporation, Ltd. were used for the molecular weights Mw < 1000 and Mw > 4 x 10$^6$, and those manufactured by Pressure Chemical Company were used for the molecular weights 1000 $\leq$ Mw $\leq$ 4 x 10$^6$.

[Stereoregularity (mm)]

The stereoregularity was determined by analyzing a $^{13}$C-NMR spectrum according to the method described in WO 2004/087775, from p. 21, line 7 to p. 26, line 6.

[Value B]

The value was determined by analyzing a [33]C-NMR spectrum according to the method described in JP-A-2007-186664.

[Melting point Tm (1) and melting enthalpy $\Delta$H (1)]

A 3 mm thick pressed sheet was prepared under the same conditions as those described in the measurement of the Shore A hardness. The sheet was stored at 23°C±2°C for 72 hours before the testing. The sheet was cooled to -40°C and was heated at a temperature increasing rate of 10°C/min, and a DSC curve was recorded. The melting point and the melting enthalpy obtained herein will be referred to as Tm (1) and $\Delta$H (1), respectively.

[Melt flow rate (MFR)]

The melt flow rate was determined at 230°C under 2.16 kg load in accordance with ASTM D 1238.

[Crystalline polyolefin polymers (B)]

Isotactic polypropylene (PP-1)

Tm (2) = 160°C, MFR (230°C) = 3.0 g/10 min, mmmm = 97.9%, ethylene content = 0.9 wt%

Isotactic polypropylene (PP-2)

Tm (2) = 147°C, MFR (230°C) = 23.0 g/10 min, mmmm = 97.7%, ethylene content = 3.2 wt%

Isotactic polypropylene (PP-3)

Tm (2) = 163°C, MFR (230°C) = 16.0 g/10 min, mmmm = 98.3%, propylene homopolymer

The properties of the isotactic polypropylenes (PP-1, PP-2 and PP-3) were measured by the following methods.

[Melting point Tm (2)]

The polymer was analyzed by differential scanning calorimetry (DSC), and endothermic and exothermic curves were recorded. The temperature at the top of the melting peak recorded during the temperature increase was obtained as Tm. In the measurement, (i) the sample placed in an aluminum pan was heated to 200°C at a rate of 100°C/min and was held at 200°C for 5 minutes, (ii) the temperature was decreased to -50°C at a rate of 20°C/min, and (iii) the temperature was increased to 200°C at a rate of 20°C/min. The recorded endothermic curve was analyzed. The melting point obtained herein will be referred to as Tm (2).
An apparatus manufactured by Perkin-Elmer, Inc. was used.

[Melt flow rate (MFR)]

The melt flow rate was determined by the same method for determining MFR of the propylene copolymers (A).

[Stereoregularity (mmmm) and comonomer (ethylene) content]

These properties were determined by analyzing a $^{13}$C-NMR spectrum.

[Propylene compositions (M)]

In Examples, a propylene composition (M) was prepared beforehand from the propylene copolymer (A) and the crystalline polyolefin polymer (B) and was used in the production of the final composition. In detail, the propylene copolymer (A) and the crystalline polyolefin polymer (B) were melt-kneaded in the following proportions to give a propylene composition (M) (pellets).

Propylene composition (M1): PBER-1/PP-1 = 90/10 wt%
Propylene composition (M2): PBER-2/PP-1 = 85/15 wt%

[Styrene block copolymers (C)]

The following commercial saturated styrene block copolymers were used.

Hydrogenated styrene/ethylene/butylene block copolymer (SEBS-1)

TUFTEC H-1221 manufactured by Asahi Kasei Corporation (styrene content = 13 wt%, MFR = 4.5 g/10 min, Shore A hardness = 36, vinyl bond content = approximately 78%) was used.

Hydrogenated styrene/ethylene/butylene block copolymer (SEBS-2)

TUFTEC H-1062 manufactured by Asahi Kasei Corporation (styrene content = 18 wt%, MFR = 4.5 g/10 min, Shore A hardness = 68, vinyl bond content = approximately 40%) was used.

Hydrogenated styrene/ethylene/butylene block copolymer (SEBS-3)

TUFTEC H-1041 manufactured by Asahi Kasei Corporation (styrene content = 30 wt%, MFR = 5 g/10 min, Shore A hardness = 82, vinyl bond content = approximately 40%) was used.

Hydrogenated styrene/ethylene/butylene block copolymer (SEBS-4)

G-1657 manufactured by Kraton Performance Polymers Inc. (styrene content = 13 wt%, MFR = 22 g/10 min, Shore A hardness = 53, vinyl bond content = approximately 20%) was used.

Hydrogenated styrene/ethylene/propylene block copolymer (SEPS-1)

SEPTON 2063 manufactured by KURARAY CO., LTD. (styrene content = 13 wt%, MFR = 7 g/10 min, Shore A hardness = 37) was used.

Hydrogenated styrene/ethylene/propylene block copolymer (SEPS-2)

SEPTON 2004 manufactured by KURARAY CO., LTD. (styrene content = 18 wt%, MFR = 5 g/10 min, Shore A hardness = 69) was used.

Hydrogenated styrene/ethylene/propylene block copolymer (SEPS-3)

G-1730 manufactured by Kraton Performance Polymers Inc. (styrene content = 20 wt%, MFR = 5 g/10 min, Shore A hardness = 65) was used.

High-molecular styrene/ethylene/butylene random copolymer (HMSEBS-1)

SEPTON 8004 manufactured by KURARAY CO., LTD. (styrene content = 31 wt%, MFR = less than 0.1 g/10 min, Shore A hardness = 81) was used.
The properties of the styrene block copolymers were measured by the following methods.
The Shore A hardness was measured by the same method as that for the propylene copolymers (A).
The melt flow rate (MFR) of the copolymers except G-1657 and G-1730 was determined by the same method as that for the propylene copolymers (A). The melt flow rate (MFR) of G-1657 and G-1730 was measured at 230°C under 5.0 kg load.

[Softener (D)]

A paraffin process oil softener (product name: PW-100, manufactured by Idemitsu Kosan Co., Ltd.) was used.

(1) Properties of thermoplastic elastomer compositions (X)

(1-1) Evaluation of basic properties of thermoplastic elastomer compositions (X)

Thermoplastic elastomer compositions (X) were prepared by adding the styrene block copolymer (C) to the propylene composition (M) formed of the propylene copolymer (A) and the crystalline polyolefin polymer (B). The basic properties thereof were compared with those of the propylene compositions (M) consisting solely of the propylene copolymer (A) and the crystalline polyolefin polymer (B), and were further compared with the styrene block copolymers (C) having various hardness, and with compositions formed from the styrene block copolymer (C) and the crystalline polyolefin polymer (B).
The evaluation items were as follows.

[Flexibility (Shore A hardness)]

The thermoplastic elastomer composition (X) prepared as described in Example or Comparative Example was preheated for 5 minutes with a hydraulic hot press machine set at 200°C and was then pressed for 2 minutes. Immediately thereafter, the composition was cooled in a cooling tank set at 20°C for 4 minutes to give a 3 mm thick pressed sheet. The sheet was stored under an environment at 23°C±2°C for 72 hours and was tested using an A-type measuring device. The hardness was determined by reading the scale immediately after the indenter touched the sheet (in accordance with ASTM D-2240).
In the production of the pressed sheet, a 100 $\mu$m release-treated PET film (LUMIRROR manufactured by TORAY INDUSTRIES INC.) was used as a release film.

[Rubber elasticity (compression set, CS)]

The thermoplastic elastomer composition (X) prepared as described in Example or Comparative Example was preheated for 5 minutes with a hydraulic hot press machine set at 200°C and was then pressed for 2 minutes. Immediately thereafter, the composition was cooled in a cooling tank set at 20°C for 4 minutes to give a 2 mm thick pressed sheet.
In the production of the pressed sheet, a 100 $\mu$m release-treated PET film (LUMIRROR manufactured by TORAY INDUSTRIES INC.) was used as a release film.
The pressed sheets were stored under an environment at 23°C±2°C for 72 hours. Six such sheets were stacked on one another and compressed 25%. The sheets were then allowed to stand at the predetermined temperature (23°C or 70°C) for 24 hours and the compression was released. The thickness after the testing was measured. Based on the results, the residual strain (compression set) after the compression for 24 hours was calculated according to the following equation.

$$\text{Residual strain (\%)} = 100 \times (\text{thickness before testing} - \text{thickness after testing}) / (\text{thickness before testing} - \text{thickness under compression})$$

The lower the residual strain, the higher the rubber elasticity. The CS value at 70°C is an indicator of heat resistance of the thermoplastic elastomer composition (X).

[Mechanical properties]

The thermoplastic elastomer composition (X) prepared as described in Example or Comparative Example was preheated for 5 minutes with a hydraulic hot press machine set at 200°C and was then pressed for 2 minutes. Immediately thereafter, the composition was cooled in a cooling tank set at 20°C for 4 minutes to give a 2 mm thick pressed sheet.
The sheet was stored under an environment at 23°C±2°C for 72 hours, and was tested in accordance with JIS K7113-2 to determine the tensile break strength (TS), the elongation at break (between the chucks, EL) and the Young's modulus (YM) (measurement temperature: 23°C, stress rate: 200 mm/min, maximum strain: 800%). When the sheet was not broken at a strain of 800%, the stress at this strain was obtained as TS.
In the production of the pressed sheet, a 100 $\mu$m release-treated PET film (LUMIRROR manufactured by TORAY INDUSTRIES INC.) was used as a release film.

[Tackiness (stickiness) at room temperature]

The thermoplastic elastomer composition (X) prepared as described in Example or Comparative Example was preheated for 5 minutes with a hydraulic hot press machine set at 200°C and was then pressed for 2 minutes. Immediately thereafter, the composition was cooled in a cooling tank set at 20°C for 4 minutes to give a 0.5 mm thick pressed sheet. In the production of the pressed sheet, a 100 $\mu$m release-treated PET film (LUMIRROR manufactured by TORAY INDUSTRIES INC.) was used as a release film.
The sheet was stored under an environment at 23°C±2°C for 72 hours, and the PET release film was separated. The pressed sheet was cut to 12.5 mm in width and 120 mm in length, and was stacked together with a 100 $\mu$m PET film (LUMIRROR manufactured by TORAY INDUSTRIES INC., cut to 12.5 mm width x 120 mm length) to give a laminate. The laminate was subjected to a load of 2.5 kgf per 1 sample (laminate) at 23°C for 24 hours.
After the load was released, the peel strength of the laminate was measured (T peel method, peel rate 200 mm/min, N/m), thereby evaluating the tackiness (stickiness) of the thermoplastic elastomer composition (X) at room temperature.

[Processability in shaping (releasability from metal)]

The thermoplastic elastomer composition (X) prepared by kneading as described in Example or Comparative Example was taken out from the mixing roll mill (stainless steel). The releasability from the rolls was evaluated.

AA: easy release, BB: slightly difficult release, CC: difficult release

The higher the melt tension, the more easily the composition can be released from the rolls such as metal rolls. Such compositions can be suitably processed with a known mixer (for example, a Banbury mixer) in the production steps.

[Examples 1 to 4]

The propylene composition (M1) formed of the propylene/ethylene/1-butene copolymer (PEBR-1) and the isotactic polypropylene (PP-1), and the hydrogenated styrene/ethylene/butylene block copolymer (SEBS-1) were kneaded together in Labo Plastomill (manufactured by Toyo Seiki Seisaku-Sho, Ltd.) (200°C, 3 min, 40 rpm) to give a thermoplastic elastomer composition (X). The components were used in the amounts shown in Table 2. The composition was evaluated by the aforementioned methods, the results being described in Table 2.

[Examples 5 to 8]

The propylene composition (M1) and the hydrogenated styrene/ethylene/propylene block copolymer (SEPS-1) were kneaded together in Labo Plastomill (manufactured by Toyo Seiki Seisaku-Sho, Ltd.) (200°C, 3 min, 40 rpm) to give a thermoplastic elastomer composition (X). The components were used in the amounts shown in Table 2. The composition was evaluated by the aforementioned methods, the results being described in Table 2.

[Examples 9 and 10]

The propylene composition (M1) and the hydrogenated styrene/ethylene/propylene block copolymer (SEBS-2) were kneaded together in Labo Plastomill (manufactured by Toyo Seiki Seisaku-Sho, Ltd.) (200°C, 3 min, 40 rpm) to give a thermoplastic elastomer composition (X). The components were used in the amounts shown in Table 2. The composition was evaluated by the aforementioned methods, the results being described in Table 2.

[Example 11]

The propylene composition (M1), the hydrogenated styrene/ethylene/propylene block copolymer (SEBS-1) and the isotactic polypropylene (PP-1) were kneaded together in Labo Plastomill (manufactured by Toyo Seiki Seisaku-Sho, Ltd.) (200°C, 3 min, 40 rpm) to give a thermoplastic elastomer composition (X). The components were used in the amounts shown in Table 2. The composition was evaluated by the aforementioned methods, the results being described in Table 2.

[Example 12]

The propylene composition (M1), the hydrogenated styrene/ethylene/propylene block copolymer (SEPS-1) and the isotactic polypropylene (PP-1) were kneaded together in Labo Plastomill (manufactured by Toyo Seiki Seisaku-Sho, Ltd.) (200°C, 3 min, 40 rpm) to give a thermoplastic elastomer composition (X). The components were used in the amounts shown in Table 2. The composition was evaluated by the aforementioned methods, the results being described in Table 2.

[Comparative Example 1]

The propylene composition (M1) formed of the propylene/ethylene/1-butene copolymer (PEBR-1) and the isotactic polypropylene (PP-1) was kneaded in Labo Plastomill (manufactured by Toyo Seiki Seisaku-Sho, Ltd.) (200°C, 3 min, 40 rpm). The components were used in the amounts shown in Table 3. The composition was evaluated by the aforementioned methods, the results being described in Table 3.

[Comparative Example 2]

The propylene composition (M2) formed of the propylene/ethylene/1-butene copolymer (PEBR-2) and the isotactic polypropylene (PP-1) was kneaded in Labo Plastomill (manufactured by Toyo Seiki Seisaku-Sho, Ltd.) (200°C, 3 min, 40 rpm) . The components were used in the amounts shown in Table 3. The composition was evaluated by the aforementioned methods, the results being described in Table 3.

[Comparative Examples 3 and 4]

Compositions were prepared in the same manner as in Examples 1 and 5, except that the propylene composition (M1) was replaced by the propylene composition (M2). The components were used in the amounts shown in Table 3. The compositions were evaluated by the aforementioned methods, the results being described in Table 3.

[Comparative Examples 5 to 9]

The hydrogenated styrene/ethylene/butylene block copolymer (SEBS-2), the hydrogenated styrene/ethylene/butylene block copolymer (SEBS-3), the hydrogenated styrene/ethylene/butylene block copolymer (SEBS-4), the hydrogenated styrene/ethylene/propylene block copolymer (SEPS-2) and the hydrogenated styrene/ethylene/propylene block copolymer (SEPS-3) were each individually kneaded in Labo Plastomill (manufactured by Toyo Seiki Seisaku-Sho, Ltd.) (200°C, 3 min, 40 rpm). The evaluations were made by the aforementioned methods, the results being described in Table 4.

[Comparative Examples 10 and 11]

The hydrogenated styrene/ethylene/butylene block copolymer (SEBS-1) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

[Comparative Examples 12 and 13]

The hydrogenated styrene/ethylene/propylene block copolymer (SEPS-1) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

[Comparative Example 14]

The hydrogenated styrene/ethylene/butylene block copolymer (SEBS-2) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

[Comparative Example 15]

The hydrogenated styrene/ethylene/butylene block copolymer (SEBS-4) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

[Comparative Example 16]

The hydrogenated styrene/ethylene/propylene block copolymer (SEPS-2) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

[Comparative Example 17]

The hydrogenated styrene/ethylene/propylene block copolymer (SEPS-3) and the isotactic polypropylene (PP-1) were kneaded in Labo Plastomill (manufactured by Toyo Seiki Seisaku-Sho, Ltd.) (200°C, 3 min, 40 rpm) to give a composition. The components were used in the amounts shown in Table 5. The composition was evaluated by the aforementioned methods, the results being described in Table 5.

⟨Results⟩

The thermoplastic elastomer compositions (X) in Examples were confirmed to have excellent heat resistance (CS at 70°C) that was comparable to that of the propylene compositions (M) of the propylene/ethylene/1-butene copolymer (PEBR-1 or PEBR-2) and the isotactic polypropylene (PP-1) illustrated in Comparative Examples 1 and 2. It was further confirmed that the releasability of the molten composition from metal was drastically improved compared to Comparative Examples 1 and 2.

Further, the thermoplastic elastomer compositions (X) in Examples were confirmed to have lower tackiness at room temperature than that of the compositions in Comparative Examples 3 and 4 which involved the propylene composition (M2).

Furthermore, the thermoplastic elastomer compositions (X) in Examples were confirmed to show markedly high heat resistance (CS at 70°C) compared to the hydrogenated styrene/ethylene/propylene block copolymers illustrated in Comparative Examples 5 to 9.

Even the addition of the isotactic polypropylene (PP-1) to these hydrogenated styrene/ethylene/propylene block copolymers did not sufficiently improve the heat resistance (CS at 70°C). Instead, the addition of PP-1 in a larger amount resulted in a tendency that the flexibility was drastically reduced (Comparative Examples 10 to 17). The thermoplastic elastomer compositions (X) in Examples were demonstrated to have an excellent balance between flexibility and heat resistance.

The results also showed that the thermoplastic elastomer compositions (X) which involved SEPS-1 had a particularly excellent performance balance and that the thermoplastic elastomer compositions (X) which involved the propylene/ethylene/1-butene copolymer (PEBR-1) and the isotactic polypropylene (PP-1) in a proportion exceeding 50 wt% achieved higher heat resistance.

[Table 2-1]

Table 2

| | | | Ex. 1 | Ex. 2 | Ex. 3 | Ex. 4 | Ex. 5 | Ex. 6 |
|---|---|---|---|---|---|---|---|---|
| Propylene composition (M1) | PEBR-1 | wt% | 72 | 54 | 32 | 18 | 72 | 54 |
| | PP-1 | wt% | 8 | 6 | 4 | 2 | 8 | 6 |
| Styrene block copolymers (C) | SEBS-1 | wt% | 20 | 40 | 60 | 80 | | |
| | SEBS-2 | wt% | | | | | | |
| | SEPS-1 | wt% | | | | | 20 | 40 |
| Crystalline PP (B) | PP-1 (additional) | wt% | | | | | | |
| | Shore A | Instantaneous value | 77 | 67 | 53 | 43 | 77 | 71 |
| | CS (23°C) | % | 23 | 19 | 19 | 17 | 28 | 26 |
| | CS (70°C) | % | 80 | 90 | 97 | 99 | 75 | 77 |
| | Break strength | MPa | 15 | 11 | 6 | 4 | 16 | 12 |
| | Elongation at break | % | 800< | 800< | 800< | 800< | 800< | 800< |
| | Young's modulus | MPa | 18 | 10 | 5 | 2 | 22 | 15 |
| | Tackiness at room temperature | N/m | 1.5 | 1.7 | 2.8 | 3.5 | 1.4 | 1.2 |
| | Releasability from metal | sensory | BB | BB | AA | AA | AA | AA |

[Table 2-2]

Table 2 (continued)

| | | | Ex. 7 | Ex. 8 | Ex. 9 | Ex. 10 | Ex. 11 | Ex. 12 |
|---|---|---|---|---|---|---|---|---|
| Propylene composition (M1) | PEBR-1 | wt% | 32 | 18 | 72 | 54 | 45 | 45 |
| | PP-1 | wt% | 4 | 2 | 8 | 6 | 5 | 5 |
| Styrene block copolymers (C) | SEBS-1 | wt% | | | | | 40 | |
| | SEBS-2 | wt% | | | 20 | 40 | | |
| | SEPS-1 | wt% | 60 | 80 | | | | 40 |
| Crystalline PP (B) | PP-1 (additional) | wt% | | | | | 10 | 10 |
| | Shore A | Instantaneous value | 62 | 50 | 79 | 75 | 77 | 79 |
| | CS (23°C) | % | 25 | 25 | 23 | 22 | 21 | 20 |
| | CS (70°C) | % | 86 | 89 | 86 | 89 | 77 | 74 |
| | Break strength | MPa | 8 | 4 | 23 | 22 | 15 | 16 |
| | Elongation at break | % | 800< | 800< | 800< | 800< | 800 | 800 |
| | Young's modulus | MPa | 9 | 4 | 21 | 20 | 19 | 28 |
| | Tackiness at room temperature | N/m | 1.2 | 1.3 | 1.4 | 1.7 | 1.7 | 0.6 |
| | Releasability from metal | sensory | AA | AA | AA | AA | AA | AA |

[Table 3]

Table 3

| | | | Comp. Ex. 1 | Comp. Ex. 2 | Comp Ex. 3 | Comp Ex. 4 |
|---|---|---|---|---|---|---|
| Propylene composition (M1) | PEBR-1 | wt% | 90 | | | |
| | PP-1 | wt% | 10 | | | |
| Propylene composition (M2) | PEBR-2 | wt% | | 85 | 68 | 68 |
| | PP-1 | wt% | | 15 | 12 | 12 |
| Styrene block copolymers (C) | SEBS-1 | wt% | | | 20 | |
| | SEPS-1 | wt% | | | | 20 |
| | Shore A | Instantaneous value | 82 | 70 | 62 | 63 |
| | CS (23°C) | % | 24 | 21 | 20 | 21 |
| | CS (70°C) | % | 73 | 62 | 72 | 68 |
| | Break strength | MPa | 19< | 12< | 9< | 10< |
| | Elongation at break | % | 800< | 800< | 800< | 800< |
| | Young's modulus | MPa | 25 | 12 | 9 | 10 |
| | Tackiness at room temperature | N/m | 1.3 | 2.2 | 2.4 | 2.0 |
| | Releasability from metal | sensory | CC | CC | AA | AA |

[Table 4]

Table 4

| | | | Comp. Ex. 5 | Comp. Ex. 6 | Comp. Ex. 7 | Comp. Ex. 8 | Comp. Ex. 9 |
|---|---|---|---|---|---|---|---|
| Styrene block copolymers (C) | SEBS-2 | wt% | 100 | | | | |
| | SEBS-3 | wt% | | 100 | | | |
| | SEBS-4 | wt% | | | 100 | | |
| | SEPS-2 | wt% | | | | 100 | |
| | SEPS-3 | wt% | | | | | 100 |
| | Shore A | Instantaneous value | 67 | 81 | 54 | 69 | 65 |
| | CS (23°C) | % | 21 | 32 | 28 | 2 | 11 |
| | CS (70°C) | % | 100 | 100 | 100 | 100 | 100 |
| | Break strength | MPa | 15 | 29 | 14< | 12 | 14 |
| | Elongation at break | % | 640 | 610 | 800< | 520 | 720 |
| | Young's modulus | MPa | 13 | 53 | 5 | 9 | 10 |
| | Tackiness at room temperature | N/m | 2.4 | 0.1 | 1.7 | 1.1 | 1.4 |
| | Releasability from metal | sensory | AA | AA | AA | AA | AA |

[Table 5]

Table 5

| | | | Comp. Ex. 10 | Comp Ex. 11 | Comp Ex. 12 | Comp. Ex. 13 | Comp. Ex. 14 | Comp. Ex. 15 | Comp. Ex. 16 | Comp. Ex. 17 |
|---|---|---|---|---|---|---|---|---|---|---|
| Styrene block copolymers (C) | SEBS-1 | | 80 | 60 | | | | | | |
| | SEBS-2 | wt% | | | | | 80 | | | |
| | SERBS-4 | wt% | | | | | | 80 | | |
| | SEPS-1 | wt% | | | 80 | 60 | | | | |
| | SEPS-2 | wt% | | | | | | | 80 | |
| | SEPS-3 | wt% | | | | | | | | 80 |
| Crystalline PP (B) | PP-1 | wt% | 20 | 40 | 20 | 40 | 20 | 20 | 20 | 20 |
| | Shore A | Instantaneous value | 63 | 91 | 66 | 90 | 81 | 65 | 82 | 77 |
| | CS (23°C) | % | 17 | 27 | 26 | 33 | 21 | 26 | 23 | 20 |
| | CS (70°C) | % | 82 | 70 | 95 | 95 | 100 | 100 | 95 | 100 |
| | Break strength | MPa | 13< | 21 | 5 | 11 | 24 | 13 | 17 | 18 |
| | Elongation at break | % | 800< | 600 | 710 | 340 | 640 | 600 | 540 | 590 |
| | Young's modulus | MPa | 14 | 70 | 11 | 280 | 30 | 8 | 33 | 60 |
| | Tackiness at room temperature | N/m | 2.2 | 1.2 | 0.9 | 0 | 1.2 | 0.8 | 0.7 | 0.9 |
| | Releasability from metal | sensory | AA | AA | AA | AA | AA | AA | AA | AA |

EP 2 415 832 B1

19

(1-2) Thermal stability of thermoplastic elastomer compositions (X) (gloss retention after temperature cycle test)

Thermoplastic elastomer compositions (X) were prepared by adding the styrene block copolymer (C) to the propylene composition (M) formed of the propylene copolymer (A) and the crystalline polyolefin polymer (B). The thermal stability (gloss retention after a temperature cycle test) thereof was compared with that of the propylene compositions consisting solely of the propylene copolymer (A) and the crystalline polyolefin polymer (B).
The evaluation items are described below.

[Flexibility (Shore A hardness)]

The thermoplastic elastomer composition (X) prepared as described in Example or Comparative Example was injection molded into a 2 mm thick plate (10 cm square).

(Injection molding conditions)

Temperature setting: H3/H2/H1/NH - 180/200/230/230°C
Mold temperature: 30°C

The plate was stored under an environment at 23°C±2°C for 72 hours and was tested using an A-type measuring device. The hardness was determined by reading the scale immediately after the indenter touched the plate (in accordance with ASTM D-2240).

[Temperature cycle test 1]

The thermoplastic elastomer composition (X) prepared as described in Example or Comparative Example was injection molded into a 2 mm thick plate (10 cm square) . The injection molding conditions were identical to those described for the Shore A hardness.
The plate was annealed in a gear oven (80°C) for 3 days and was cooled to room temperature outside the oven. The gloss retention of this specimen was evaluated. The gloss value was measured at 60°C in accordance with JIS K-7105.

$$\text{Gloss retention (\%)} = 100 \times \text{(gloss value after annealing)/(initial gloss value)}$$

[Examples 21 to 27]

A thermoplastic elastomer composition (X) was prepared by blending 80 wt% of the propylene composition (M1) and 20 wt% of any of the hydrogenated styrene/ethylene/butylene block copolymers (SEBS-1), (SEBS (SEBS-3) and (SEBS-4) or the hydrogenated styrene/ethylene/propylene block copolymers (steps-1), (SEPS-2) and (SEPS-3). The kneading conditions for the production of the thermoplastic elastomer composition (X) were identical to those described in Example 1. The thermoplastic elastomer composition (X) was evaluated by the aforementioned methods, the results being described in Table 6.

[Comparative Example 21]

The propylene composition (M1) alone was kneaded under the same conditions as described in Comparative Example 1. The composition was evaluated by the aforementioned methods, the results being described in Table 7.

[Comparative Example 22]

The propylene composition (M2) alone was kneaded under the same conditions as described in Comparative Example 2. The composition was evaluated by the aforementioned methods, the results being described in Table 7.

[Comparative Examples 23 to 29]

A composition was prepared by blending 80 wt% of the propylene composition (M2) and 20 wt% of any of the hydrogenated styrene/ethylene/butylene block copolymers (SEBS-1), (SEBS-2), (SEBS-3) and (SEBS-4) or the hydrogenated styrene/ethylene/propylene block copolymers (SEPS-1), (SEPS-2) and (SEPS-3). The kneading conditions for the production of the composition were identical to those described in Example 1. The composition was evaluated by the aforementioned methods, the results being described in Table 8.

⟨Results⟩

The results of Examples 21 to 27 showed that the thermoplastic elastomer compositions (X) maintained the surface gloss even after subjected to the heat treatment at a high temperature. These compositions were prepared by adding the hydrogenated styrene/ethylene/propylene block copolymer to the propylene/ethylene/1-butene copolymer (PEBR-1) and the isotactic polypropylene (PP-1).

In contrast, the compositions (Comparative Examples 21 and 22) which were the propylene compositions (M) formed of the propylene/ethylene/1-butene copolymer (PEBR-1 or PEBR-2) and the isotactic polypropylene (PP-1) were confirmed to have drastically lowered the surface gloss after the heat treatment at a high temperature.

Similarly, the heat treatment at a high temperature resulted in a drastic lowering of the surface gloss for the compositions prepared by adding the hydrogenated styrene/ethylene/propylene block copolymer to the propylene composition (M2) including the propylene/ethylene/1-butene copolymer (PEBR-2).

The thermoplastic elastomer compositions (X) in Examples were thus confirmed to have excellent thermal stability.

[Table 6]

Table 6

|  |  |  | Ex. 21 | Ex. 22 | Ex. 23 | Ex. 24 | Ex. 25 | Ex. 26 | Ex. 27 |
|---|---|---|---|---|---|---|---|---|---|
| Propylene composition (M1) | PEBR-1 | wt% | 72 | 72 | 72 | 72 | 72 | 72 | 72 |
|  | PP-1 | wt% | 8 | 8 | 8 | 8 | 8 | 8 | 8 |
| Styrene block copolymers (C) | SEBS-1 | wt% | 20 |  |  |  |  |  |  |
|  | SEBS-2 | wt% |  | 20 |  |  |  |  |  |
|  | SEBS-3 | wt% |  |  | 20 |  |  |  |  |
|  | SEBS-4 | wt% |  |  |  | 20 |  |  |  |
|  | SEPS-1 | wt% |  |  |  |  | 20 |  |  |
|  | SEPS-2 | wt% |  |  |  |  |  | 20 |  |
|  | SEPS-3 | wt% |  |  |  |  |  |  | 20 |
|  | Shore A | Instantaneous value | 77 | 80 | 83 | 79 | 77 | 79 | 79 |
|  | Temperature cycle 1 | Initial (%) | 121 | 118 | 104 | 117 | 123 | 118 | 109 |
|  |  | Final (%) | 115 | 104 | 102 | 98 | 119 | 115 | 102 |
|  |  | Retention (%) | 95.0 | 88.1 | 98.1 | 83.8 | 96.7 | 97.5 | 93.6 |

[Table 7]

Table 7

|  |  |  | Comp. Ex. 21 | Comp. Ex. 22 |
|---|---|---|---|---|
| Propylene composition (M1) | PEBR-1 | wt% | 90 |  |
|  | PP-1 | wt% | 10 |  |

(continued)

|  | | | Comp. Ex. 21 | Comp. Ex. 22 |
|---|---|---|---|---|
| Propylene composition (M2) | PEBR-2 | wt% | | 85 |
| | PP-1 | wt% | | 15 |
| | Shore A | Instantaneous value | 83 | 72 |
| | Temperature cycle 1 | Initial (%) | 122 | 124 |
| | | Final (%) | 21 | 16 |
| | | Retention (%) | 17.2 | 12.9 |

[Table 8]

Table 8

| | | | Comp. Ex. 23 | Comp. Ex. 24 | Comp. Ex. 25 | Comp. Ex. 26 | Comp. Ex. 27 | Comp. Ex. 28 | Comp. Ex. 29 |
|---|---|---|---|---|---|---|---|---|---|
| Propylene composition (M2) | PEBR-2 | wt% | 68 | 68 | 68 | 68 | 68 | 68 | 68 |
| | PP-1 | wt% | 12 | 12 | 12 | 12 | 12 | 12 | 12 |
| Styrene block copolymers (C) | SEBS-1 | wt% | 20 | | | | | | |
| | SEBS-2 | wt% | | 20 | | | | | |
| | SEBS-3 | wt% | | | 20 | | | | |
| | SEBS-4 | wt% | | | | 20 | | | |
| | SEPS-1 | wt% | | | | | 20 | | |
| | SEPS-2 | wt% | | | | | | 20 | |
| | SEPS-3 | wt% | | | | | | | 20 |
| | Shore A | Instantaneous value | 62 | 69 | 73 | 68 | 63 | 68 | 67 |
| | Temperature cycle 1 | Initial (%) | 124 | 120 | 115 | 120 | 122 | 120 | 114 |
| | | Final (%) | 29 | 77 | 78 | 44 | 73 | 82 | 34 |
| | | Retention (%) | 23.4 | 64.2 | 67.8 | 36.7 | 59.8 | 68.3 | 29.8 |

(2) Applied properties 1 of thermoplastic elastomer compositions (X)

Thermoplastic elastomer compositions (X) were prepared using the propylene composition (M) which was formed of the propylene copolymer (A) and the crystalline polyolefin polymer (B), as well as using the injection-molding isotactic polypropylene (PP)-2) corresponding to the crystalline polyolefin polymer (B) and the styrene block copolymer (C). Properties of injection molded products of the compositions were compared to those of compositions consisting of the propylene copolymer (A) and the crystalline polyolefin polymer (B) and compositions consisting of the styrene block copolymer (C) and the crystalline polyolefin polymer (B).
The evaluation items are described below.

[Flexibility (Shore D hardness)]

The thermoplastic elastomer composition (X) prepared as described in Example or Comparative Example was injection molded into a 2 mm thick plate (10 cm square).

(Injection molding conditions)

Temperature setting: H3/H2/H1/NH = 180/200/230/230°C
Mold temperature: 30°C

The plate was tested using a D-type measuring device, and the hardness was determined by reading the scale after 5 seconds after the indenter touched the plate (in accordance with ASTM D-2240).

[Temperature cycle test 1]

The thermoplastic elastomer composition (X) prepared as described in Example or Comparative Example was injection molded into a 2 mm thick plate (10 cm square). The injection molding conditions were identical to those described for the Shore D hardness.
The plate was annealed in a gear oven (80°C) for 3 days and was cooled to room temperature outside the oven. The gloss retention of this specimen was evaluated.

$$\text{Gloss retention (\%)} = 100 \times (\text{gloss value after annealing})/(\text{initial gloss value})$$

[Mechanical properties]

The thermoplastic elastomer composition (X) prepared as described in Example or Comparative Example was injection molded into an ASTM D-638 type IV dumbbell specimen.

(Injection molding conditions)

Temperature setting: H3/H2/H1/NH = 180/200/230/230°C
Mold temperature: 30 ° C

The specimen was tested to determine the tensile break strength (TS), the elongation at break (between the chucks, EL) and the Young's modulus (YM) (measurement temperature: 233°C, stress rate: 200 mm/min).

[TMA softening temperature]

The thermoplastic elastomer composition (X) prepared as described in Example or Comparative Example was injection molded into a specimen 2.8 mm in thickness (t), 12.5 mm in width (w) and 128 mm in length (L). The injection molding conditions were identical to those described for the mechanical properties.

The specimen was tested with a thermomechanical analyzer (TMA) in accordance with JIS K7196. In detail, a plane indenter 1.8 mm in diameter was allowed to press the specimen at 2 kgf/cm$^2$ and the temperature was increased at 5°C/min, and the needle penetration temperature (°C) was determined from a TMA curve.

[Whitening on bending]

The thermoplastic elastomer composition (X) prepared as described in Example or Comparative Example was injection molded into a specimen 2.8 mm in thickness (t), 12. 5 mm in width (w) and 128 mm in length (L). The injection molding conditions were identical to those described for the mechanical properties.

The specimen was bent and was visually inspected for the whitening phenomenon occurring in the bent portion.

AA: no whitening, CC: whitening

[Examples 31 to 35]

A thermoplastic elastomer composition (X) was prepared by blending the propylene composition (M1) with the isotactic polypropylene (PP-2) and any of the hydrogenated styrene/ethylene/butylene block copolymers (SEBS-1) and (SEBS-2) or the hydrogenated styrene/ethylene/propylene block copolymers (SEPS-1) and (SEPS-2). The kneading conditions for the production of the thermoplastic elastomer composition (X) were identical to those described in Example 1. The components were used in the amounts described in Table 9. The thermoplastic elastomer composition (X) was evaluated by the aforementioned methods, the results being described in Table 9.

[Comparative Example 31]

The propylene composition (M1) and the isotactic polypropylene (PP-2) were kneaded under the same conditions as described in Example 1, thereby producing a composition. The components were used in the amounts described in Table 10. The composition was evaluated by the aforementioned methods, the results being described in Table 10.

[Comparative Example 32]

The propylene composition (M2) and the isotactic polypropylene (PP-2) were kneaded under the same conditions as described in Example 1, thereby producing a composition. The components were used in the amounts described in Table 10. The composition was evaluated by the aforementioned methods, the results being described in Table 10.

[Comparative Examples 33 and 34]

The hydrogenated styrene/ethylene/butylene block copolymer (SEBS-1) and the isotactic polypropylene (PP2) were kneaded under the same conditions as described in Example 1, thereby producing a composition. The components were used in the amounts described in Table 10. The composition was evaluated by the aforementioned methods, the results being described in Table 10.

[Comparative Examples 35 and 36]

The hydrogenated styrene/ethylene/butylene block copolymer (SEBS-2) and the isotactic polypropylene (PP-2) were kneaded under the same conditions as described in Example 1, thereby producing a composition. The components were used in the amounts described in Table 10. The composition was evaluated by the aforementioned methods, the results being described in Table 10.

⟨Results⟩

The shaped articles of the thermoplastic elastomer compositions (X) from Examples 31 to 35 maintained the gloss even after subjected to the heat treatment at a high temperature, and showed an excellent balance between flexibility and heat resistance. These shaped articles were free from whitening on bending.

Comparative Examples 33 to 36 illustrated the properties of the shaped articles consisting of the two components which were the hydrogenated styrene/ethylene/butylene block copolymer and the isotactic polypropylene (PP-2). These shaped articles showed good thermal stability. However, the use of the hydrogenated styrene/ethylene/butylene block copolymer in a large amount (60 wt% or more) resulted in a low softening temperature and caused a bad fluidity which led to a rough surface of the injection molded article and a consequent low initial gloss value. Increasing the addition amount of PP-2 was confirmed to greatly reduce the flexibility.

The molded articles which had a high rigidity (high Young's modulus) showed noticeable whitening on bending.

[Table 9]

Table 9

| | | | Ex. 31 | Ex. 32 | Ex. 33 | Ex. 34 | Ex. 35 |
|---|---|---|---|---|---|---|---|
| Propylene composition (M1) | PEBR-1 | wt% | 36 | 36 | 36 | 36 | 36 |
| | PP-1 | wt% | 4 | 4 | 4 | 4 | 4 |
| Crystalline PP (B) | PP-2 | wt% | 20 | 20 | 20 | 20 | 40 |
| Styrene block copolymers (C) | SEBS-1 | wt% | 40 | | | | |
| | SEBS-2 | wt% | | 40 | | | 20 |
| | SEPS-1 | wt% | | | 40 | | |
| | SEPS-2 | wt% | | | | 40 | |
| | Shore D | After 5 seconds | 25 | 32 | 25 | 33 | 42 |
| | TMA softening temperature | °C | 120 | 141 | 127 | 141 | 140 |
| | Break strength | % | 16 | 19 | 14 | 18 | 23 |
| | Elongation at break | % | 730 | 600 | 670 | 650 | 610 |
| | Young's modulus | MPa | 20 | 55 | 40 | 65 | 140 |
| | Whitening on bending | Visual observation | AA | AA | AA | AA | AA |
| | Temperature cycle 1 | Initial (%) | 126 | 112 | 113 | 122 | 111 |
| | | Final (%) | 90 | 111 | 99 | 120 | 100 |
| | | Retention (%) | 71.4 | 99.1 | 87.6 | 98.4 | 90.1 |

[Table 10]

Table 10

| | | | Comp. Ex. 31 | Comp. Ex. 32 | Comp. Ex. 33 | Comp. Ex. 34 | Comp. Ex. 35 | Comp. Ex. 36 |
|---|---|---|---|---|---|---|---|---|
| Propylene composition (M1) | PEBR-1 | wt% | 72 | | | | | |
| | PP-1 | wt% | 8 | | | | | |
| Propylene composition (M2) | PEBR-2 | wt% | | 68 | | | | |
| | PP-1 | wt% | | 12 | | | | |
| Crystalline PP (B) | PP-2 | wt% | 20 | 20 | 40 | 60 | 20 | 40 |
| Styrene block copolymers (C) | SEBS-1 | wt% | | | 60 | 40 | | |
| | SEBS-2 | wt% | | | | | 80 | 60 |
| | Shore D | After 5 seconds | 32 | 28 | 28 | 38 | 34 | 42 |
| | TMA softening temperature | °C | 131 | 133 | 135 | 140 | 101 | 135 |

(continued)

| | | | Comp. Ex. 31 | Comp . Ex. 32 | Comp. Ex. 33 | Comp. Ex. 34 | Comp. Ex. 35 | Comp. Ex. 36 |
|---|---|---|---|---|---|---|---|---|
| | Break strength | % | 24 | 25 | 14 | 20 | 21 | 21 |
| | Elongation at break | % | 800< | 800< | 740 | 530 | 730 | 560 |
| | Young's modulus | MPa | 65 | 35 | 40 | 180 | 90 | 260 |
| | Whitening on bending | Visual observation | AA | AA | AA | AA | AA | CC |
| Temperature cycle 1 | | Initial (%) | 121 | 122 | 102 | 114 | 107 | 110 |
| | | Final (%) | 26 | 20 | 74 | 94 | 104 | 107 |
| | | Retention (%) | 21.5 | 16.4 | 72.5 | 82.5 | 97.2 | 97.3 |

(3) Applied properties 2 of thermoplastic elastomer compositions (X)

Evaluations were made with respect to thermoplastic elastomer compositions (X) which were designed using the propylene composition (M) formed of the propylene copolymer (A) and the crystalline polyolefin polymer (B), as well as using the injection-molding isotactic polypropylene (PP)-3 corresponding to the crystalline polyolefin polymer (B), the paraffin process oil as the softener (d), and the high-molecular styrene/ethylene/butylene random copolymer (HMSEBS-1) having excellent affinity for the paraffin process oil.

The properties of the compositions were compared with those of a composition which was designed without the propylene composition (M), namely a composition which consisted of the isotactic polypropylene (PP-3), the paraffin process oil and the high-molecular styrene/ethylene/butylene random copolymer (HMSEBS-1).

The evaluation items are described below.

[Melt flow rate (MFR)]

The thermoplastic elastomer composition (X) prepared as described in Example or Comparative Example was tested to obtain a MFR (at 230°C under 2.16 kg load in accordance with ASTM D 1238).

[Flexibility (Shore A hardness)]

The thermoplastic elastomer composition (X) prepared as described in Example or Comparative Example was injection molded into a 2 mm thick plate (10 cm square).

(Injection molding conditions)

Temperature setting: H3/H2/H1/NH = 180/200/230/230°C
Mold temperature: 30°C

The plate was stored under an environment at 23 °C±2°C for 72 hours and was tested using an A-type measuring device. The hardness was determined by reading the scale immediately after the indenter touched the plate (in accordance with ASTM D-2240).

[Injection molding properties]

The above sample (plate) for the measurement of the Shore A hardness was observed to evaluate the presence or absence of flow marks on the surface.

[Temperature cycle test 2]

The thermoplastic elastomer composition (X) prepared as described in Example or Comparative Example was injection molded into a specimen 2. 8 mm in thickness (t), 12. 5 mm in width (w) and 128 mm in length (L). The injection molding conditions were identical to those described for the Shore A hardness.

The specimen was annealed in a gear oven (80°C) for 3 days and was cooled to room temperature outside the oven. The surface condition of the specimen (the presence or absence of oil bleed) was evaluated.

[Mechanical properties]

The thermoplastic elastomer composition (X) prepared as described in Example or Comparative Example was injection molded into an ASTM D-638 type IV dumbbell specimen.

(Injection molding conditions)

Temperature setting: H3/H2/H1/NH = 180/200/230/230°C
Mold temperature: 30°C

The specimen was tested to determine the tensile break strength (TS), the elongation at break (between the chucks, EL) and the Young' modulus (YM) (measurement temperature: 23° C, stress rate: 200 mm/min).

[Rubber elasticity (compression set, CS)]

The thermoplastic elastomer composition (X) prepared as described in Example or Comparative Example was preheated for 5 minutes with a hydraulic hot press machine set at 200°C and was then pressed for 2 minutes. Immediately thereafter, the composition was cooled in a cooling tank set at 20°C for 4 minutes to give a 2 mm thick pressed sheet.

In the production of the pressed sheet, a 100 $\mu$m release--treated PET film (LUMIRROR manufactured by TORAY INDUSTRIES INC.) was used as a release film.

The pressed sheets were stored under an environment at 23°C±2°C for 72 hours. Six such sheets were stacked on one another and compressed 25%. The sheets were then allowed to stand at the predetermined temperature (23°C, 70°C or 100°C) for 24 hours and the compression was released. The thickness after the testing was measured. Based on the results, the residual strain (compression set) after the compression for 24 hours was calculated according to the following equation.

$$\text{Residual strain (\%)} = 100 \times (\text{thickness before testing} - \text{thickness after testing})/(\text{thickness before testing} - \text{thickness under compression})$$

The lower the residual strain, the higher the rubber elasticity. The CS value at 70°C is an indicator of heat resistance of the thermoplastic elastomer composition (X).

[Preparation of evaluation compounds]

The thermoplastic elastomer compositions (X) in Examples and the composition in Comparative Example were obtained by kneading the components in a twin-screw extruder (TEX-30, kneading temperature = 240°C).

(3-1) Comparison of properties obtained by replacing part of isotactic polypropylene (PP-3) with propylene composition (M)

[Examples 41 and 42]

A thermoplastic elastomer composition (X) was prepared by adding the high-molecular, hydrogenated styrene/ethylene/butylene block copolymer (HMSEBS-1), the isotactic polypropylene (PP-3) and the paraffin process oil to the propylene composition (M1). The components were used in the amounts shown in Table 11 (wherein the term "parts" indicates "parts by weight"). The thermoplastic elastomer composition (X) was evaluated by the aforementioned methods, the results being described in Table 11.

[Comparative Example 41]

A composition was prepared by blending the high-molecular, hydrogenated styrene/ethylene/butylene block copolymer (HMSEBS-1), the isotactic polypropylene (PP-3) and the paraffin process oil. (The propylene composition (M1) in Examples 41 and 42 was replaced by PP-3.) The components were used in the amounts shown in Table 11. The composition was evaluated by the aforementioned methods, the results being described in Table 11.

⟨Results⟩

From the comparison with Comparative Example 41, replacing a proportion of PP-3 by the propylene composition (M1) resulted in improved flexibility without changes in other properties such as fluidity and rubber elasticity.
[Table 11]

Table 11

| | | | Ex. 41 | Ex. 42 | Comp. Ex. 41 |
|---|---|---|---|---|---|
| Propylene composition (M1) | PEBR-1 | parts | 13.5 | 22.5 | |
| | PP-1 | parts | 1.5 | 2.5 | |
| Styrene block copolymer (C) | HMSEBS-1 | parts | 150 | 150 | 150 |
| Crystalline PP (B) | PP-3 | parts | 60 | 50 | 75 |
| Softener (D) | paraffin oil | parts | 100 | 100 | 100 |
| Total | | parts | 325 | 325 | 325 |
| | MFR | g/10 min | 18 | 17 | 18 |
| | Shore A | Instantaneous value | 78 | 73 | 80 |
| | Injection moldability | Visual observation | AA | AA | AA |
| | Temperature cycle 2 | Visual observation | AA | AA | AA |
| | Break strength | MPa | 10 | 9 | 11 |
| | Elongation at break | % | 460 | 460 | 500 |
| | Young's modulus | MPa | 38 | 27 | 44 |
| | CS (23°C) | % | 15 | 15 | 16 |
| | CS (70°C) | % | 87 | 90 | 92 |

(3-2) Comparison of properties obtained by replacing part of high-molecular, hydrogenated styrene/ethylene/butylene block copolymer (HMSEBS-1) with propylene composition (M)

[Examples 43 to 47]

A thermoplastic elastomer composition (X) was prepared by adding the high-molecular, hydrogenated styrene/ethylene/butylene block copolymer (HMSEBS-1), the isotactic polypropylene (PP-3) and the paraffin process oil to the propylene composition (M1). The components were used in the amounts shown in Table 12 (wherein the term "parts" indicates "parts by weight"). The thermoplastic elastomer composition (X) was evaluated by the aforementioned methods, the results being described in Table 12.

[Comparative Examples 42 and 43]

A composition was prepared by blending the high-molecular, hydrogenated styrene/ethylene/butylene block copolymer (HMSEBS-1), the isotactic polypropylene (PP-3) and the paraffin process oil. (The propylene composition (M1) in Examples 43 to 45 was replaced by HMSEBS-1.) The components were used in the amounts shown in Table 12. The composition was evaluated by the aforementioned methods, the results being described in Table 12.

⟨Results⟩

From the comparison with Comparative Examples 42 and 43, replacing a proportion of HMSEBS-1 by the propylene composition (M1) resulted in drastically improved injection moldability without deteriorations in flexibility, rubber elasticity and heat resistance. It was also confirmed that the heat resistance was drastically improved when the propylene composition (M1) and the isotactic polypropylene (PP-3) exceeded 50 wt%.

The molded products from Examples 43 to 47 which involved the propylene composition (M1) had a similar hardness to that in Comparative Examples 42 and 43, and their Young's moduli were lower than in these comparative examples. This result indicates that the molded products have good flexibility (flex properties) as well as excellent scratch resistance.

[Table 12]

Table 12

| | | | Ex. 43 | Ex. 44 | Ex. 45 | Ex. 46 | Ex. 47 | Comp. Ex. 42 | Comp. Ex. 43 |
|---|---|---|---|---|---|---|---|---|---|
| Propylene composition (M1) | PEBR-1 | parts | 67.5 | 112.5 | 45 | 67.5 | 90 | | |
| | PP-1 | parts | 7.5 | 12.5 | 5 | 7.5 | 10 | | |
| Styrene block copolymer (C) | HMSEBS-1 | parts | 125 | 75 | 100 | 75 | 50 | 200 | 150 |
| Crystalline PP (B) | PP-3 | parts | 50 | 50 | 50 | 50 | 50 | 50 | 50 |
| Softener (D) | paraffin oil | parts | 100 | 100 | 100 | 100 | 100 | 100 | 100 |
| Total | | parts | 350 | 350 | 300 | 300 | 300 | 350 | 300 |
| Proportion of PP-1 + PP-3 + PEBR-1 | | wt% | 36 | 50 | 33 | 42 | 50 | | |
| | MFR | g/10 min | 20 | 34 | 36 | 48 | 52 | 7 | 12 |
| | Shore A | Instantaneous value | 74 | 75 | 75 | 75 | 76 | 70 | 73 |
| | Injection moldability | Visual observation | AA | AA | AA | AA | AA | CC | BB |
| | Temperature cycle 2 | Visual observation | AA | AA | AA | AA | AA | AA | AA |
| | Break strength | MPa | 11 | 13 | 11 | 11 | 10 | 10 | 9 |
| | Elongation at break | % | 620 | 780 | 660 | 720 | 620 | 550 | 540 |
| | Young's modulus | MPa | 16 | 14 | 20 | 16 | 16 | 23 | 25 |
| | CS (23°C) | % | 19 | 23 | 20 | 23 | 25 | 16 | 15 |
| | CS (70°C) | % | 79 | 74 | 87 | 83 | 76 | 84 | 95 |

(3-3) Comparison of properties of compositions designed with reduced amount of oil

[Examples 48 to 51]

A thermoplastic elastomer composition (X) was prepared by adding the high-molecular, hydrogenated styrene/ethylene/butylene block copolymer (HMSEBS-1), the isotactic polypropylene (PP-3) and the paraffin process oil to the propylene composition (M1). The components were used in the amounts shown in Table 13 (wherein the term "parts" indicates "parts by weight"). The thermoplastic elastomer composition (X) was evaluated by the aforementioned methods, the results being described in Table 13. In these examples, the amount of the paraffin oil was reduced from that in Examples 41 to 47.

[Comparative Examples 44 to 47]

A composition was prepared by blending the high-molecular, hydrogenated styrene/ethylene/butylene block copolymer (HMSEBS-1), the isotactic polypropylene (PP-3) and the paraffin process oil. (The amount of the oil was equal to that in Examples 48 to 51.) The components were used in the amounts shown in Table 13. The composition was evaluated by the aforementioned methods, the results being described in Table 13.

⟨Results⟩

The compositions from Comparative Examples 44 to 47 could not achieve a balance between flexibility and fluidity because of the reduction of the oil amount. In contrast, the compositions from Examples 48 to 51 which involved the propylene composition (M1) were confirmed to have high flexibility and good injection molding properties.
[Table 13]

Table 13

| | | | Ex. 48 | Ex. 49 | Ex. 50 | Ex. 51 | Comp. Ex. 44 | Comp. Ex. 45 | Comp. Ex. 46 | Comp. Ex. 47 |
|---|---|---|---|---|---|---|---|---|---|---|
| Propylene composition (M1) | PEBR-1 | parts | 45 | 85.5 | 90 | 94.5 | | | | |
| | PP-1 | parts | 5 | 9.5 | 10 | 10.5 | | | | |
| Styrene block copolymer (C) | HMSEBS-1 | parts | 100 | 70 | 75 | 55 | 150 | 100 | 200 | 150 |
| Crystalline PP (B) | PP-3 | parts | 50 | 35 | 25 | 40 | 50 | 100 | 50 | 100 |
| Softener (D) | paraffin oil | parts | 50 | 50 | 50 | 50 | 50 | 50 | 50 | 50 |
| Total | | parts | 250 | 250 | 250 | 250 | 250 | 250 | 300 | 300 |
| Proportion of PP-1 + PP-3 + PEBR-1 | | wt% | 40 | 52 | 50 | 58 | | | | |
| | MFR | g/10 min | 8 | 12 | 7 | 12 | 2 | 8 | 0.7 | 3 |
| | Shore A | Instantaneous value | 85 | 80 | 78 | 84 | 83 | 96 | 79 | 93 |
| | Injection moldability | Visual observation | AA | AA | AA | AA | CC | BB | CC | CC |
| | Temperature cycle 2 | Visual observation | AA | AA | AA | AA | AA | AA | AA | AA |
| | Break strength | MPa | 16 | 17 | 20 | 19 | 18 | 24 | 33 | 30 |
| | Elongation at break | % | 730 | 640 | 800 | 750 | 610 | 430 | 740 | 550 |
| | Young's modulus | MPa | 21 | 37 | 21 | 30 | 43 | 180 | 31 | 110 |
| | CS (23°C) | % | 17 | 19 | 20 | 23 | 16 | 22 | 14 | 20 |
| | CS (70°C) | % | 87 | 69 | 68 | 65 | 86 | 86 | 84 | 85 |
| | CS (100 doc) | % | 91 | 90 | 91 | 84 | 100 | 100 | 100 | 100 |

**Claims**

1. A thermoplastic elastomer composition (X) which comprises 95 to 5 wt% of a propylene copolymer (A) satisfying all the requirements (A1) to (A3) described below, 0 to 70 wt% of a crystalline polyolefin polymer (B) and 5 to 95 wt% of a styrene block copolymer (C) (wherein the total of the propylene copolymer (A), the crystalline polyolefin polymer (B) and the styrene block copolymer (C) is 100 wt%);

   (A1) the Shore A hardness (room temperature, ASTM D 2240) is in the range of 55 to 85;
   (A2) the copolymer gives a melting peak Tm in the range of 30 to 95°C according to differential scanning calorimetry (DSC), and the endothermic enthalpy $\Delta H$ corresponding to the melting peak is in the range of 1.0 to 20 J/g;
   (A3) the molecular weight distribution Mw/Mn according to gel permeation chromatography (GPC) is in the range of 1.2 to 3.0 (wherein Mw and Mn are the weight average molecular weight and the number average molecular weight, respectively, and are values calibrated to polystyrenes).

2. The thermoplastic elastomer composition (X) according to claim 1, wherein the propylene copolymer (A) further satisfies all the requirements (A4) to (A6) below:

   (A4) the copolymer is a propylene/ethylene/$C_{4-20}$ $\alpha$-olefin copolymer comprising 51 to 90 mol% of structural units derived from propylene, 7 to 24 mol% of structural units derived from ethylene and 3 to 25 mol% of structural units derived from a $C_{4-20}$ $\alpha$-olefin (wherein the total of the structural units from propylene, the structural units from ethylene and the structural units from a $C_{4-20}$ $\alpha$-olefin is 100 mol%);
   (A5) the isotactic triad fraction (mm) calculated by $^{13}$C-NMR is 85 to 99.9%;
   (A6) the value B defined by Equation (1) below is 0.8 to 1.3:
   [Math. 1]

$$B = \frac{M_{OE}}{2\,M_O \cdot M_E} \qquad \cdots (1)$$

   wherein $M_{OE}$ is the molar fraction of the total of propylene-ethylene sequences and $C_{4-20}$ $\alpha$-olefin-ethylene sequences to all the dyad sequences, $M_O$ is the total of the molar fractions of propylene and the $C_{4-20}$ $\alpha$-olefin, and $M_E$ is the molar fraction of ethylene.

3. The thermoplastic elastomer composition (X) according to claim 1 or 2, wherein the crystalline polyolefin polymer (B) is a crystalline propylene polymer which satisfies all the requirements (B1) and (B2) below:

   (B1) the melting point Tm (B) according to differential scanning calorimetry (DSC) is in the range of 100 to 175°C;
   (B2) the isotactic pentad fraction (mmmm) is 80 to 99.8%.

4. The thermoplastic elastomer composition (X) according to any one of claims 1 to 3, wherein the Shore A hardness (room temperature, ASTM D 2240) is in the range of 40 to 85.

5. The thermoplastic elastomer composition (X) according to any one of claims 1 to 4, wherein the total content of the propylene copolymer (A) and the crystalline polyolefin polymer (B) is not less than 50 wt%.

6. The thermoplastic elastomer composition (X) according to any one of claims 1 to 5, further comprising a softener (D).

**Patentansprüche**

1. Thermoplastische Elastomerzusammensetzung (X), die 95 bis 5 Gew.% eines Propylen-Copolymers (A), das alle der nachstehend beschriebenen Anforderungen (A1) bis (A3) erfüllt, 0 bis 70 Gew.% eines kristallinen Polyolefinpolymers (B) und 5 bis 95 Gew.% eines Styrol-Blockcopolymers (C) umfasst (wobei die Summe an Propylen-Copolymer (A), kristallinem Polyolefinpolymer (B) und Styrol-Blockcopolymer 100 Gew.% beträgt);

   (A1) eine Shore A-Härte (Raumtemperatur, ASTM D 2240) im Bereich von 55 bis 85;

(A2) das Copolymer ergibt einen Schmelzpeak Tm im Bereich von 30 bis 95°C gemäss Differential-Scanning-Kalorimetrie (DSC) und die endotherme Enthalpie ΔH entsprechend dem Schmelzpeak liegt im Bereich von 1,0 bis 20 J/g;

(A3) die Molekulargewichtsverteilung Mw/Mn gemäss Gelpermeationschromatografie (GPC) liegt im Bereich von 1,2 bis 3,0 (worin Mw und Mn das gewichtsgemittelte Molekulargewicht bzw. das zahlengemittelte Molekulargewicht sind und Werte darstellen, die auf Polystyrol kalibriert wurden).

**2.** Thermoplastische Elastomerzusammensetzung (X) gemäss Anspruch 1, wobei das Propylen-Copolymer (A) ferner alle nachstehenden Anforderungen (A4) bis (A6) erfüllt:

(A4) das Copolymer ist ein Propylen/Ethylen/$C_{4-20}$-α-Olefin-Copolymer, umfassend 51 bis 90 mol-% an von Propylen abgeleiteten Struktureinheiten, 7 bis 24 mol-% an von Ethylen abgeleiteten Struktureinheiten und 3 bis 25 mol-% an von einem $C_{4-20}$-α-Olefin abgeleiteten Struktureinheiten (wobei die Summe der Struktureinheiten von Propylen, der Struktureinheiten von Ethylen und der Struktureinheiten von $C_{4-20}$-α-Olefin 100 mol-% beträgt);

(A5) die isotaktische Triadenfraktion (mm), berechnet durch $^{13}$C-NMR, beträgt 85 bis 99,9 %;

(A6) der durch die nachstehende Gleichung (1) definierte Wert B ist 0,8 bis 1,3:

$$B= \frac{M_{OE}}{2\,M_O \cdot M_E} \qquad \cdots (1)$$

worin $M_{OE}$ der molare Anteil der Summe an Propylen-Ethylen-Sequenzen und $C_{4-20}$-α-Olefin-Ethylen-Sequenzen aller Dyadensequenzen ist, $M_O$ die Summe der molaren Anteile an Propylen und $C_{4-20}$-α-Olefin ist und $M_E$ die Summe des molaren Anteils an Ethylen ist.

**3.** Thermoplastische Elastomerzusammensetzung (X) gemäss Anspruch 1 oder 2, wobei das kristalline Polyolefinpolymer (B) ein kristallines Propylenpolymer ist, das alle nachstehenden Anforderungen (B1) und (B2) erfüllt:

(B1) der Schmelzpunkt (Tm)(B) gemäss Differential-Scanning-Kalorimetrie (DSC) liegt im Bereich von 100 bis 175°C;

(B2) die isotaktische Pentadenfraktion (mmmm) beträgt 80 bis 99,8 %.

**4.** Thermoplastische Elastomerzusammensetzung (X) gemäss irgendeinem der Ansprüche 1 bis 3, wobei die Shore A-Härte (Raumtemperatur, ASTM D 2240) im Bereich von 40 bis 85 liegt.

**5.** Thermoplastische Elastomerzusammensetzung (X) gemäss irgendeinem der Ansprüche 1 bis 4, wobei der Gesamtgehalt an Propylen-Copolymer (A) und kristallinem Polyolefinpolymer (B) nicht weniger als 50 Gew.% beträgt.

**6.** Thermoplastische Elastomerzusammensetzung (X) gemäss irgendeinem der Ansprüche 1 bis 5, die ferner einen Weichmacher (D) umfasst.

**Revendications**

**1.** Composition d'élastomère thermoplastique (X) qui comprend de 95 % à 5 % en poids d'un copolymère de propylène (A) satisfaisant toutes les exigences (A1) à (A3) décrites ci-dessous, de 0 % à 70 % en poids d'un polymère de polyoléfine cristalline (B) et de 5 % à 95 % en poids d'un copolymère séquencé de styrène (C) (dans laquelle la somme des quantités du copolymère de propylène (A), du polymère de polyoléfine cristalline (B) et du copolymère séquencé de styrène (C) est égale à 100 % en poids) ;

(A1) la dureté Shore A (à température ambiante, ASTM D 2240) est dans la plage de 55 à 85 ;

(A2) le copolymère présente un pic de fusion Tm dans la plage de 30°C à 95°C conformément à une mesure par calorimétrie différentielle à balayage (DSC), et l'enthalpie endothermique ΔH correspondant au pic de fusion est comprise dans le domaine de 1 à 20 J/g ;

(A3) la distribution de poids moléculaire Mw/Mn conformément à une chromatographie par perméation de gel (GPC) est dans la plage de 1,2 à 3 (dans laquelle Mw et Mn sont respectivement le poids moléculaire moyen en poids et le poids moléculaire moyen en nombre et sont des valeurs calibrées pour des polystyrènes).

2. Composition d'élastomère thermoplastique (X) selon la revendication 1, dans laquelle le copolymère de propylène (A) satisfait en outre toutes les exigences (A4) à (A6) ci-dessous :

(A4) le copolymère est un copolymère de propylène/éthylène/$\alpha$-oléfine en C$_{4-20}$ comprenant de 51 % à 90 % en mole d'unités structurelles dérivées du propylène, de 7% à 24% en mole d'unités structurelles dérivées de l'éthylène et de 3 % à 25 % en mole d'unités structurelles dérivées d'une $\alpha$-oléfine en C$_{4-20}$ (dans laquelle la somme des quantités des unités structurelles de propylène, des unités structurelles d'éthylène et des unités structurelles d'$\alpha$-oléfine en C$_{4-20}$ est égale à 100 % en mole) ;
(A5) la fraction de triade isotactique (mm) calculée par $^{13}$C-NMR est comprise entre 85 % et 99,9 % ;
(A6) la valeur B définie par l'équation (1) ci-dessous est comprise entre 0,8 et 1, 3 :
[Math. 1]

$$B = \frac{M_{OE}}{2 M_O . M_E}$$

. . . (1)

dans laquelle M$_{OE}$ est la fraction molaire du total des séquences de propylène-éthylène et des séquences d'$\alpha$-oléfine en C$_{4-20}$ - éthylène sur toutes les séquences de dyade, M$_o$ est le total des fractions molaires du propylène et de l'$\alpha$-oléfine en C$_{4-20}$, et M$_E$ est la fraction molaire de l'éthylène.

3. Composition d'élastomère thermoplastique (X) selon la revendication 1 ou 2, dans laquelle le polymère de polyoléfine cristalline (B) consiste en un polymère de propylène cristallin qui satisfait toutes les exigences (B1) et (B2) ci-dessous :

(B1) le point de fusion Tm (B) conformément à une calorimétrie différentielle à balayage (DSC) est dans la plage de 100°C à 175°C ;
(B2) la fraction de pentade isotactique (mmmm) est comprise entre 80% et 99,8%.

4. Composition d'élastomère thermoplastique (X) selon l'une quelconque des revendications 1 à 3, dans laquelle la dureté Shore A (à température ambiante, ASTM D 2240) est dans la plage de 40 à 85.

5. Composition d'élastomère thermoplastique (X) selon l'une quelconque des revendications 1 à 4, dans laquelle le contenu total du copolymère de propylène (A) et du polymère de polyoléfine cristalline (B) est au moins égal à 50 % en poids.

6. Composition d'élastomère thermoplastique (X) selon l'une quelconque des revendications 1 à 5, comprenant en outre un émollient (D).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348432 A
- JP 2002187998 A
- JP 3700515 B
- JP 3757162 B
- WO 2004106430 A
- WO 2006057361 A

- JP 58215446 A
- EP 2226357 A1
- JP H07145212 A
- WO 2004087775 A
- JP 2007186664 A